(19) Europäisches Patentamt
European Patent Office
Office européen des brevets

(11) EP 3 946 938 B1

# (12) EUROPEAN PATENT SPECIFICATION

(45) Date of publication and mention of the grant of the patent:
**07.08.2024 Bulletin 2024/32**

(21) Application number: **20719870.6**

(22) Date of filing: **24.03.2020**

(51) International Patent Classification (IPC):
***B32B 27/08*** $^{(2006.01)}$ ***B32B 27/32*** $^{(2006.01)}$
***C08J 5/18*** $^{(2006.01)}$

(52) Cooperative Patent Classification (CPC):
**B32B 27/08; B32B 27/32;** B32B 2250/03; B32B 2250/04; B32B 2250/05; B32B 2250/24; B32B 2270/00; B32B 2307/72; B32B 2307/7265; B32B 2307/732

(86) International application number:
**PCT/US2020/024396**

(87) International publication number:
**WO 2020/198195 (01.10.2020 Gazette 2020/40)**

## (54) MULTILAYER FILMS, LAMINATES, AND ARTICLES COMPRISING MULTILAYER FILMS

MULTILAYER-FILME, -LAMINATE UND ARTIKEL MIT MULTILAYER-FILMEN

FILMS MULTICOUCHES, STRATIFIÉS ET ARTICLES COMPRENANT DES FILMS MULTICOUCHES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2019 US 201962824096 P**

(43) Date of publication of application:
**09.02.2022 Bulletin 2022/06**

(73) Proprietor: **Dow Global Technologies LLC**
**Midland, MI 48674 (US)**

(72) Inventors:
- **BUASZCZYK, Gianna**
  **04797-000 Sao Paulo (BR)**
- **MAZZOLA, Nicolas Cardoso**
  **04794-000 Sao Paulo (BR)**
- **GOMES, Jorge Caminero**
  **04794-000 Sao Paulo (BR)**
- **BARBOSA, Bruno Cesar De Moraes**
  **04794-000 Sao Paulo (BR)**

(74) Representative: **Boult Wade Tennant LLP**
**Salisbury Square House**
**8 Salisbury Square**
**London EC4Y 8AP (GB)**

(56) References cited:
**WO-A1-2015/200741 WO-A1-2015/200743**
**WO-A1-2018/063578 WO-A1-2018/063693**
**WO-A1-2018/195269 WO-A1-2019/005930**
**WO-A1-2019/006053 WO-A1-2019/060387**
**CA-A- 423 529 US-A- 3 549 389**

- **JOSEPH DOOLEY ET AL: "COEXTRUSION", ENCYCLOPEDIA OF POLYMER SCIENCE AND TECHNOLOGY, VOL. 2, 22 October 2001 (2001-10-22), pages 1 - 25, XP055195638, Retrieved from the Internet <URL:http://onlinelibrary.wiley.com/store/10.1002/0471440264.pst064/asset/pst064.pdf?v=1&t=iaxinksz&s=ef41a11450c0ed4dc7505764e7c46333e191b179> [retrieved on 20150615], DOI: 10.1002/0471440264.pst064**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 946 938 B1

## Description

### Field

This disclosure relates to multilayer films, to laminates comprising multilayer films, and to articles comprising multilayer films. WO2019108326 relates to laminates.

### Introduction

The retention of oil and grease within polymer film packages is currently a challenge. In consumer and manufacturing segments, the need to retain oil and grease within a package are common demands for sectors such as food pouches or packaging for pet food. Currently, high density polyethylene (HDPE) resins or polyamides (PA) are commonly relied upon to provide a barrier layer in a coextruded film to prevent migration of oil or grease to the exterior of packaging or to an intermediate lamination layer. However, a barrier layer is not impervious to oil and grease and migration of oil and grease is not entirely prevented such that over time the oil and grease is able to reach the exterior of the packaging.

A key desired attribute of a multilayer film for packaging oily or greasy items is minimizing the migration of the oil and grease and maximizing the time for oil or grease to pass through the multilayer film. However, as barrier layers with HDPE or PA, for example, are not impervious to oil and grease, alternative multilayer films are required to further improve packaging performance. Thus, there is a need in the art for alternative structures that further decrease the migration of oil or grease through a multilayer coextruded film.

In addition to having improved barrier properties preventing the migration of oil and grease, it would also be desirable to have multilayer films having improved or desirable mechanical properties.

### Summary

The present invention provides multilayer films that provide desirable mechanical properties (e.g., dart impact, tear resistance, modulus, and/or puncture resistance) as well as desirable grease barrier and/or moisture barrier. This combination of properties can be advantageous in a variety of packaging applications.

In one aspect, the present invention provides a multilayer film that comprises:

(a) a first layer comprising a first composition, wherein the first composition comprises at least one ethylene-based polymer and wherein the first composition has a density of less than 0.935 g/cm$^3$, a melt index ($I_2$) of less than 2.0 g/10 minutes, a MWCDI value greater than 0.9, and a melt index ratio ($I_{10}/I_2$) that meets the following equation: $I_{10}/I_2 \geq 7.0 - 1.2 \times \log(I_2)$, wherein the first layer comprises at least 50 percent by weight of the first composition based on the weight of the first layer;
(b) a second layer comprising a first polyethylene having a density of greater than 0.950 g/cm$^3$ and a melt index ($I_2$) of less 2.0 g/10 minutes, wherein the second layer comprises at least 40 percent by weight of the first polyethylene based on the weight of the second layer; and
(c) a sealant layer,

wherein the multilayer film comprises at least 29 weight percent of the first composition based on the total weight of the film, and wherein the multilayer film comprises at least 15 weight percent of the first polyethylene based on the total weight of the film, wherein the multilayer film does not include polyamide, wherein the multilayer film has an overall density from 0.924 to 0.940 g/cm$^3$, wherein the densities are measured according to ASTM D792 (method B), the melt indices $I_2$ and $I_{10}$ are measured according to ASTM DI238 (method B) at 190°C and at 2.16 kg and 10 kg load, respectively, and the MWCDI is measured as set out in the description.

As discussed below, the present invention also provides laminates and other articles formed from the inventive multilayer films disclosed herein.

These and other embodiments are described in more detail in the Detailed Description.

### Detailed Description

Unless stated to the contrary, implicit from the context, or customary in the art, all parts and percents are based on weight, all temperatures are in ° C, and all test methods are current as of the filing date of this disclosure.

The term "composition," as used herein, refers to a mixture of materials which comprises the composition, as well as reaction products and decomposition products formed from the materials of the composition.

"Polymer" means a polymeric compound prepared by polymerizing monomers, whether of the same or a different type. The generic term polymer thus embraces the term homopolymer (employed to refer to polymers prepared

from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer. A polymer may be a single polymer, a polymer blend or a polymer mixture, including mixtures of polymers that are formed *in situ* during polymerization.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The terms "olefin-based polymer" or "polyolefin", as used herein, refer to a polymer that comprises, in polymerized form, a majority amount of olefin monomer, for example ethylene or propylene (based on the weight of the polymer), and optionally may comprise one or more comonomers.

The term, "ethylene/$\alpha$-olefin interpolymer," as used herein, refers to an interpolymer that comprises, in polymerized form, a majority amount (>50 mol %) of units derived from ethylene monomer, and the remaining units derived from one or more $\alpha$-olefins. Typical $\alpha$-olefins used in forming ethylene/a-olefin interpolymers are $C_3$-$C_{10}$ alkenes.

The term, "ethylene/$\alpha$-olefin copolymer," as used herein, refers to a copolymer that comprises, in polymerized form, a majority amount (>50 mol%) of ethylene monomer, and an $\alpha$-olefin, as the only two monomer types.

The term "a-olefin", as used herein, refers to an alkene having a double bond at the primary or alpha ($\alpha$) position.

"Polyethylene" or "ethylene-based polymer" shall mean polymers comprising a majority amount (>50 mol %) of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599,392). LDPE resins typically have a density in the range of 0.916 to 0.935 g/$cm^3$.

The term "LLDPE", includes both resin made using the traditional Ziegler-Natta catalyst systems and chromium-based catalyst systems as well as single-site catalysts, including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/$cm^3$. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5.

The term "HDPE" refers to polyethylenes having densities greater than about 0.935 g/$cm^3$ and up to about 0.970 g/$cm^3$, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/$cm^3$, which are generally prepared with Ziegler-Natta catalysts, chrome catalysts, or single-site catalysts including, but not limited to, bis-metallocene catalysts and constrained geometry catalysts.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend. Such blends can be prepared as dry blends, formed *in situ* (e.g., in a reactor), melt blends, or using other techniques known to those of skill in the art.

The term "in adhering contact" and like terms mean that one facial surface of one layer and one facial surface of another layer are in touching and binding contact to one another such that one layer cannot be removed from the other layer without damage to the interlayer surfaces (i.e., the in-contact facial surfaces) of both layers.

The terms "comprising," "including," "having," and their derivatives, are not intended to exclude the presence of any additional component, step or procedure, whether or not the same is specifically disclosed. In order to avoid any

doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

In one aspect, the present invention provides a multilayer film that comprises (a) a first layer comprising a first composition, wherein the first composition comprises at least one ethylene-based polymer and wherein the first composition has a density of less than 0.935 g/cm$^3$, a melt index ($I_2$) of less than 2.0 g/10 minutes, a MWCDI value greater than 0.9, and a melt index ratio ($I_{10}/I_2$) that meets the following equation: $I_{10}/I_2$ % 7.0 - 1.2 x log ($I_2$), wherein the first layer comprises at least 50 percent by weight of the first composition based on the weight of the first layer; (b) a second layer comprising a second polyethylene having a density of greater than 0.950 g/cm$^3$ and a melt index ($I_2$) of less 2.0 g/10 minutes, wherein the second layer comprises at least 40 percent by weight of the first polyethylene based on the weight of the second layer; and (c) a third layer which is a sealant layer, wherein the multilayer film comprises at least 29 weight percent of the first composition based on the total weight of the film, and wherein the multilayer film comprises at least 15 weight percent of the first polyethylene based on the total weight of the film. In some embodiments, the multilayer film comprises at least 30 weight percent of the first polyethylene based on the total weight of the film. In some embodiments, the multilayer film comprises at least 15 weight percent of the first polyethylene and at least 60 weight percent of the first composition, based on the total weight of the film, wherein the multilayer film does not include polyamide, wherein the multilayer film has an overall density from 0.924 to 0.940 g/cm3, wherein the densities are measured according to ASTM D792 (method B), the melt indices I2 and I10 are measured according to ASTM DI238 (method B) at 190°C and at 2.16 kg and 10 kg load, respectively, and the MWCDI is measured as set out in the description.

In some embodiments, the combined amount of the first composition and the first polyethylene is at least 60 weight percent of the film based on the total weight of the film. The combined amount of the first composition and the first polyethylene, in some embodiments, is at least 65 weight percent of the film based on the total weight of the film. In some embodiments, the combined amount of the first composition and the first polyethylene is at least 70 weight percent of the film based on the total weight of the film.

In some embodiments, the multilayer film has a total thickness of less than 120 microns. The multilayer film has a total thickness of less than 80 microns in some embodiments.

The multilayer film, in some embodiments, has an overall density from 0.924 to 0.940 g/cm$^3$.

In some embodiments, the multilayer film is a four layer film. In one such embodiment, the fourth layer comprises at least 50 percent by weight of the first composition based on the weight of the fourth layer. In some such embodiments, the film has an average time for failure due to grease migration of greater than 100 hours when measured according to ASTM F-119 at 60° C at a film thickness of 100 microns, and the film has a dart impact of greater than 700 grams when measured according to ASTM D-1709 (Method B) at a film thickness of 100 microns.

In some embodiments, the multilayer film is a five layer film. In one such embodiment, a fourth layer comprises at least 50 percent by weight of the first composition based on the weight of the fourth layer, and a fifth layer comprises at least 50 percent by weight of the first polyethylene based on the weight of the fifth layer, wherein the multilayer film comprises at least 40 weight percent of the first polyethylene based on the total weight of the film. In some such embodiments, the film has a dart impact of greater than 400 grams when measured according to ASTM D-1709 (Method B) at a film thickness of 75 microns, the film has a tear value in the machine direction of greater than 400 grams when measured according to ASTM D-1922 at a film thickness of 75 microns, and the film has a water vapor transmission rate of less than 1.4 g/(m$^2$*day) when measured according to ASTM E-398 at 38° C, 100% relative humidity, and a film thickness of 75 microns.

A multilayer film of the present invention can comprise a combination of two or more embodiments as described herein.

Some embodiments of the present invention relate to laminates. In some embodiments, a laminate comprises a multilayer film according to any of the inventive embodiments disclosed herein adhered to a second film comprising polyethylene. A laminate of the present invention can comprise a combination of two or more embodiments as described herein.

Some embodiments of the present invention relate to articles. An article according to embodiments of the present invention comprises a multilayer film according to any of the inventive embodiments disclosed herein. An article of the present invention can comprise a combination of two or more embodiments as described herein.

A multilayer film of the present invention comprises at least three layers: (1) a first composition comprising at least one ethylene-based polymer (the first composition is described further below), wherein the first layer comprises at least 50 percent by weight of the first composition based on the weight of the first layer; (2) a second layer comprising a first polyethylene having a density of greater than 0.950 g/cm$^3$ and a melt index ($I_2$) of less 2.0 g/10 minutes (the first polyethylene is discussed further below), wherein the second layer comprises at least 40 percent by weight of the first polyethylene based on the weight of the second layer; and (3) a third layer which is a sealant layer. These layers are

discussed in further detail below. The multilayer film comprises at least 29 weight percent of the first composition based on the total weight of the film, and at least 15 weight percent of the first polyethylene based on the total weight of the film

First Layer

In describing a first layer of the multilayer film, it should be understood that the term "first" is used to identify the layer within the context of the other layers in the film.

First Composition

As discussed above, the first layer comprises a first composition, comprising at least one ethylene-based polymer, wherein the first composition has a density of less than 0.935 g/cm$^3$, a melt index ($I_2$) of less than 2.0 g/10 minutes, a MWCDI value greater than 0.9, and a melt index ratio ($I_{10}/I_2$) that meets the following equation: $I_{10}/I_2 \geq 7.0 - 1.2 \times \log(I_2)$.

The ethylene-based polymer may comprise a combination of two or more embodiments as described herein.

In one embodiment, the first composition has a density in the range of 0.910 to 0.935 g/cm$^3$, for example from 0.910 to 0.930, or from 0.910 to 0.925 g/cm$^3$. For example, the density can be from a lower limit of 0.910, 0.912, or 0.914 g/cm$^3$, to an upper limit of 0.925, 0.927, 0.930, or 0.935 g/cm$^3$ (1 cm$^3$ = 1 cc).

In one embodiment, the first composition has a melt index ($I_2$ or I2; at 190°C / 2.16kg) from 0.1 to 2.0 g/10 minutes, for example from 0.1 to 1.8 g/10 minutes, or from 0.1 to 1.5 g/10 minutes, or from 0.1 to 1.0 g/10 minutes. For example, the melt index ($I_2$ or I2; at 190°C / 2.16 kg) can be from a lower limit of 0.1, 0.2, or 0.5 g/10 minutes, to an upper limit of 1.0, 1.2, 1.4, 1.5, 1.7, 1.8, or 2.0 g/10 minutes.

In one embodiment, the first composition has a MWCDI value less than, or equal to, 10.0, further less than, or equal to, 8.0, further less than, or equal to, 6.0.

In one embodiment, the first composition has a MWCDI value less than, or equal to, 5.0, further less than, or equal to, 4.0, further less than, or equal to, 3.0.

In one embodiment, the first composition has a MWCDI value greater than, or equal to, 1.0, further greater than, or equal to, 1.1, further greater than, or equal to, 1.2.

In one embodiment, the first composition has a MWCDI value greater than, or equal to, 1.3, further greater than, or equal to, 1.4, further greater than, or equal to, 1.5.

In one embodiment, the first composition has a melt index ratio $I_{10}/I_2$ greater than, or equal to, 7.0, further greater than, or equal to, 7.1, further greater than, or equal to, 7.2, further greater than, or equal to, 7.3.

In one embodiment, the first composition has a melt index ratio $I_{10}/I_2$ less than, or equal to, 9.2, further less than, or equal to, 9.0, further less than, or equal to, 8.8, further less than, or equal to, 8.5.

In one embodiment, the first composition has a ZSVR value from 1.2 to 3.0, further from 1.2 to 2.5, further 1.2 to 2.0.

In one embodiment, the first composition has a vinyl unsaturation level greater than 10 vinyls per 1,000,000 total carbons. For example, greater than 20 vinyls per 1,000,000 total carbons, or greater than 50 vinyls per 1,000,000 total carbons, or greater than 70 vinyls per 1,000,000 total carbons, or greater than 100 vinyls per 1,000,000 total carbons.

In one embodiment, the first composition has a molecular weight distribution, expressed as the ratio of the weight average molecular weight to number average molecular weight ($M_w/M_n$; as determined by conv. GPC) in the range of from 2.2 to 5.0. For example, the molecular weight distribution ($M_w/M_n$) can be from a lower limit of 2.2, 2.3, 2.4, 2.5, 3.0, 3.2, or 3.4, to an upper limit of 3.9, 4.0, 4.1, 4.2, 4.5, 5.0.

In one embodiment, the first composition has a number average molecular weight ($M_n$; as determined by conv. GPC) in the range from 10,000 to 50,000 g/mole. For example, the number average molecular weight can be from a lower limit of 10,000, 20,000, or 25,000 g/mole, to an upper limit of 35,000, 40,000, 45,000, or 50,000 g/mole.

In one embodiment, the first composition has a weight average molecular weight ($M_w$; as determined by conv. GPC) in the range from 70,000 to 200,000 g/mole. For example, the number average molecular weight can be from a lower limit of 70,000, 75,000, or 78,000 g/mole, to an upper limit of 120,000, 140,000, 160,000, 180,000 or 200,000 g/mole.

In one embodiment, the first composition has a melt viscosity ratio, Eta*0.1 / Eta*100, in the range from 2.2 to 7.0. For example, the number average molecular weight can be from a lower limit of 2.2, 2.3, 2.4 or 2.5, to an upper limit of 6.0, 6.2, 6.5, or 7.0.

In one embodiment, the ethylene-based polymer is an ethylene/a-olefin interpolymer, and further an ethylene/a-olefin copolymer.

In one embodiment, the first ethylene-based polymer is an ethylene/a-olefin interpolymer, and further an ethylene/a-olefin copolymer.

In one embodiment, the $\alpha$-olefin has less than, or equal to, 20 carbon atoms. For example, the $\alpha$-olefin comonomers may preferably have 3 to 10 carbon atoms, and more preferably 3 to 8 carbon atoms. Exemplary $\alpha$-olefin comon-

omers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-butene, 1-hexene and 1-octene, and further 1-hexene and 1-octene.

In one embodiment, the ethylene-based polymer, or first ethylene-based polymer, has a molecular weight distribution ($M_w/M_n$; as determined by conv. GPC) in the range from 1.5 to 4.0, for example, from 1.5 to 3.5, or from 2.0 to 3.0. For example, the molecular weight distribution ($M_w/M_n$) can be from a lower limit of 1.5, 1.7, 2.0, 2.1, or 2.2, to an upper limit of 2.5, 2.6, 2.8, 3.0, 3.5, or 4.0.

In one embodiment, the first composition further comprises a second ethylene-based polymer. In a further embodiment, the second ethylene-based polymer is an ethylene/$\alpha$-olefin interpolymer, and further an ethylene/a-olefin copolymer, or a LDPE.

In one embodiment, the $\alpha$-olefin has less than, or equal to, 20 carbon atoms. For example, the $\alpha$-olefin comonomers may preferably have 3 to 10 carbon atoms, and more preferably 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-butene, 1-hexene and 1-octene, and further 1-hexene and 1-octene.

In one embodiment, the second ethylene-based polymer is a heterogeneously branched ethylene/a-olefin interpolymer, and further a heterogeneously branched ethylene/a-olefin copolymer. Heterogeneously branched ethylene/a-olefin interpolymers and copolymers are typically produced using Ziegler/Natta type catalyst system, and have more comonomer distributed in the lower molecular weight molecules of the polymer.

In one embodiment, the second ethylene-based polymer has a molecular weight distribution ($M_w/M_n$) in the range from 3.0 to 5.0, for example from 3.2 to 4.6. For example, the molecular weight distribution ($M_w/M_n$) can be from a lower limit of 3.2, 3.3, 3.5, 3.7, or 3.9, to an upper limit of 4.6, 4.7, 4.8, 4.9, or 5.0.

In some embodiments, the first composition comprising at least one ethylene-based polymer and having a density of less than 0.935 g/cm$^3$, a melt index ($I_2$) of less than 2.0 g/10 minutes, a MWCDI value greater than 0.9, and a melt index ratio ($I_{10}/I_2$) that meets the following equation: $I_{10}/I_2 \geq 7.0 - 1.2 \times \log(I_2)$ comprises at least 50 percent by weight of the first layer of a multilayer film of the present invention based on the weight of the first layer. The first layer, in some embodiments, comprises 60 to 99 weight percent of the first composition based on the weight of the first layer. In some embodiments, the first layer comprises 70 to 99 weight percent of the first composition, based on the weight of the first layer. In some embodiments, the first layer comprises at least 80 weight percent of the first composition, based on the weight of the first layer.

The first composition can be used in other layers in the multilayer film according to some embodiments of the present invention. In some embodiments, the multilayer film overall comprises at least 29 weight percent of the first composition comprising at least one ethylene-based polymer and having a density of less than 0.935 g/cm$^3$, a melt index ($I_2$) of less than 2.0 g/10 minutes, a MWCDI value greater than 0.9, and a melt index ratio ($I_{10}/I_2$) that meets the following equation: $I_{10}/I_2 \geq 7.0 - 1.2 \times \log(I_2)$ based on the total weight of the multilayer film. The multilayer film, in some embodiments, comprises at least 50 weight percent of the first composition based on the total weight of the multilayer film. The multilayer film, in some embodiments, comprises at least 60 weight percent of the first composition based on the total weight of the multilayer film.

The following discussion focuses on preparation of the first composition for use in embodiments of the present invention.

### *Polymerization*

With regard to polymerization of the first composition (used in the first layer and potentially in other layers) comprising at least one ethylene-based polymer with the first composition having a density of less than 0.935 g/cm$^3$, a melt index ($I_2$) of less than 2.0 g/10 minutes, a MWCDI value greater than 0.9, and a melt index ratio ($I_{10}/I_2$) that meets the following equation: $I_{10}/I_2 \geq 7.0 - 1.2 \times \log(I_2)$, polymerization processes include, but are not limited to, solution polymerization processes, using one or more conventional reactors, e.g., loop reactors, isothermal reactors, adiabatic reactors, stirred tank reactors, autoclave reactors in parallel, series, and/or any combinations thereof. The ethylene based polymer compositions may, for example, be produced via solution phase polymerization processes, using one or more loop reactors, adiabatic reactors, and combinations thereof.

In general, the solution phase polymerization process occurs in one or more well mixed reactors, such as one or more loop reactors and/or one or more adiabatic reactors at a temperature in the range from 115 to 250°C; for example, from 135 to 200°C, and at pressures in the range of from 300 to 1000 psig, for example, from 450 to 750 psig.

In one embodiment, the ethylene based polymer composition (e.g., the first composition comprising at least one ethylene-based polymer with the first composition having a MWCDI value greater than 0.9, and a melt index ratio

(I10/I2) that meets the following equation: $I_{10}/I_2 \geq 7.0 - 1.2 \times \log(I_2)$) may be produced in two loop reactors in series configuration, the first reactor temperature is in the range from 115 to 200°C, for example, from 135 to 165°C, and the second reactor temperature is in the range from 150 to 210°C, for example, from 185 to 200°C. In another embodiment, the ethylene based polymer composition may be produced in a single reactor, the reactor temperature is in the range from 115 to 200°C, for example from 130 to 190°C. The residence time in a solution phase polymerization process is typically in the range from 2 to 40 minutes, for example from 5 to 20 minutes. Ethylene, solvent, one or more catalyst systems, optionally one or more cocatalysts, and optionally one or more comonomers, are fed continuously to one or more reactors. Exemplary solvents include, but are not limited to, isoparaffins. For example, such solvents are commercially available under the name ISOPAR E from ExxonMobil Chemical. The resultant mixture of the ethylene based polymer composition and solvent is then removed from the reactor or reactors, and the ethylene based polymer composition is isolated. Solvent is typically recovered via a solvent recovery unit, i.e., heat exchangers and separator vessel, and the solvent is then recycled back into the polymerization system.

In one embodiment, the ethylene based polymer composition may be produced, via a solution polymerization process, in a dual reactor system, for example a dual loop reactor system, wherein ethylene, and optionally one or more a-olefins, are polymerized in the presence of one or more catalyst systems, in one reactor, to produce a first ethylene-based polymer, and ethylene, and optionally one or more a-olefins, are polymerized in the presence of one or more catalyst systems, in a second reactor, to produce a second ethylene-based polymer. Additionally, one or more cocatalysts may be present.

In another embodiment, the ethylene based polymer composition may be produced via a solution polymerization process, in a single reactor system, for example, a single loop reactor system, wherein ethylene, and optionally one or more a-olefins, are polymerized in the presence of one or more catalyst systems. Additionally, one or more cocatalysts may be present.

The process for forming a composition comprising at least two ethylene-based polymers can comprise the following:

polymerizing ethylene, and optionally at least one comonomer, in solution, in the present of a catalyst system comprising a metal-ligand complex of Structure I, to form a first ethylene-based polymer; and
polymerizing ethylene, and optionally at least one comonomer, in the presence of a catalyst system comprising a Ziegler/Natta catalyst, to form a second ethylene-based polymer; and wherein Structure I is as follows:

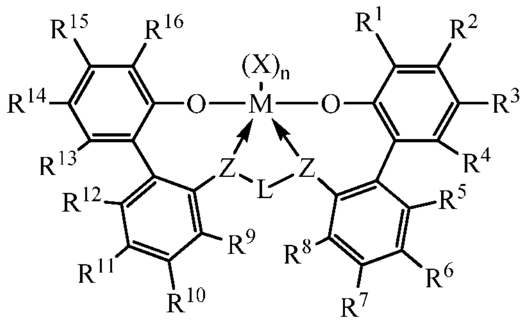

(I),

wherein:

M is titanium, zirconium, or hafnium, each, independently, being in a formal oxidation state of +2, +3, or +4; and
n is an integer from 0 to 3, and wherein when n is 0, X is absent; and
each X, independently, is a monodentate ligand that is neutral, monoanionic, or dianionic; or two Xs are taken together to form a bidentate ligand that is neutral, monoanionic, or dianionic; and
X and n are chosen, in such a way, that the metal-ligand complex of formula (I) is, overall, neutral; and
each Z, independently, is O, S, N(C1-C40)hydrocarbyl, or P(C1-C40)hydrocarbyl; and
wherein the Z-L-Z fragment is comprised of formula (1):

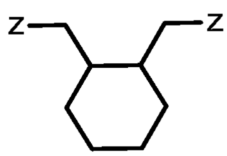

(1);

$R^1$ through $R^{16}$ are each, independently, selected from the group consisting of the following: a substituted or unsubstituted (C 1-C40)hydrocarbyl, a substituted or unsubstituted (C1-C40)heterohydrocarbyl, $Si(R^C)3$, $Ge(R^C)3$, $P(R^P)2$, $N(R^N)2$, $OR^C$, $SR^C$, NO2, CN, CF3, $R^CS(O)$-, $R^CS(O)2$-, $(R^C)2C$=N-, $R^CC(O)O$-, $R^COC(O)$-, $R^CC(O)N(R)$-, $(R^C)2NC(O)$-, halogen atom, hydrogen atom; and wherein each $R^C$ is independently a (C1-C30)hydrocarbyl; $R^P$ is a (C1-C30)hydrocarbyl; and $R^N$ is a (C1-C30)hydrocarbyl; and

wherein, optionally, two or more R groups (from $R^1$ through $R^{16}$) can combine together into one or more ring structures, with such ring structures each, independently, having from 3 to 50 atoms in the ring, excluding any hydrogen atom.

In another embodiment, the process can comprise polymerizing ethylene, and optionally at least one α-olefin, in solution, in the presence of a catalyst system comprising a metal-ligand complex of Structure I, to form a first ethylene-based polymer; and polymerizing ethylene, and optionally at least one α-olefin, in the presence of a catalyst system comprising a Ziegler/Natta catalyst, to form a second ethylene-based polymer. In a further embodiment, each α-olefin is independently a C1-C8 α-olefin .

In one embodiment, optionally, two or more R groups from $R^9$ through $R^{13}$, or $R^4$ through $R^8$ can combine together into one or more ring structures, with such ring structures each, independently, having from 3 to 50 atoms in the ring, excluding any hydrogen atom.

In one embodiment, M is hafnium.

In one embodiment, $R^3$ and $R^{14}$ are each independently an alkyl, and further a C1-C3 alkyl, and further methyl.

In one embodiment, $R^1$ and $R^{16}$ are each as follows:

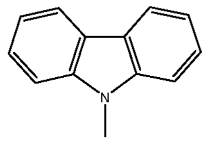
.

In one embodiment, each of the aryl, heteroaryl, hydrocarbyl, heterohydrocarbyl, $Si(R^C)3$, $Ge(R^C)3$, $P(R^P)2$, $N(R^N)2$, $OR^C$, $SR^C$, $R^CS(O)$-, $R^CS(O)2$-, $(R^C)2C$=N-, $R^CC(O)O$-, $R^COC(O)$-, $R^CC(O)N(R)$-, $(R^C)2NC(O)$-, hydrocarbylene, and heterohydrocarbylene groups, independently, is unsubstituted or substituted with one or more $R^S$ substituents; and each $R^S$ independently is a halogen atom, polyfluoro substitution, perfluoro substitution, unsubstituted (C1-C18)alkyl, F3C-, FCH2O-, F2HCO-, F3CO-, R3Si-, R3Ge-, RO-, RS-, RS(O)-, RS(O)2-, R2P-, R2N-, R2C=N-, NC-, RC(O)O-, ROC(O)-, RC(O)N(R)-, or R2NC(O)-, or two of the $R^S$ are taken together to form an unsubstituted (C1-C18)alkylene, wherein each R independently is an unsubstituted (C1-C18)alkyl.

In one embodiment, two or more of $R^1$ through $R^{16}$ do not combine to form one or more ring structures.

In one embodiment, the catalyst system suitable for producing the first ethylene/α-olefin interpolymer is a catalyst system comprising bis((2-oxoyl-3-(dibenzo-1H-pyrrole-1-yl)-5-(methyl)phenyl)-2-phenoxymethyl)-methylene-1,2-cyclohexanediylhafnium (IV) dimethyl, represented by the following Structure: IA:

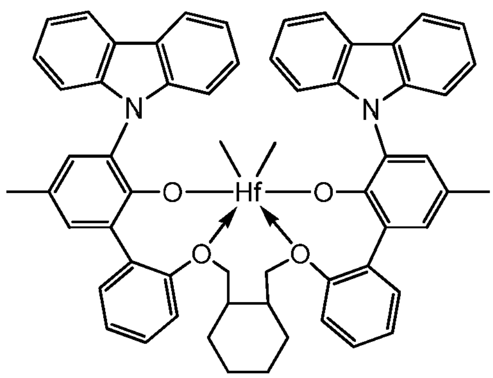
(IA).

The Ziegler/Natta catalysts suitable for use in the invention are typical supported, Ziegler-type catalysts, which are particularly useful at the high polymerization temperatures of the solution process. Examples of such compositions are those derived from organomagnesium compounds, alkyl halides or aluminum halides or hydrogen chloride, and a transition metal compound. Examples of such catalysts are described in U.S. Pat Nos. 4,612,300; 4,314,912; and 4,547,475.

Particularly suitable organomagnesium compounds include, for example, hydrocarbon soluble dihydrocarbylmagnesium, such as the magnesium dialkyls and the magnesium diaryls. Exemplary suitable magnesium dialkyls include, particularly, n-butyl-sec-butylmagnesium, diisopropylmagnesium, di-n-hexylmagnesium, isopropyl-n-butylmagnesium, ethyl-n-hexyl-magnesium, ethyl-n-butylmagnesium, di-n-octylmagnesium, and others, wherein the alkyl has from 1 to 20 carbon atoms. Exemplary suitable magnesium diaryls include diphenylmagnesium, dibenzylmagnesium and ditolylmagnesium. Suitable organomagnesium compounds include alkyl and aryl magnesium alkoxides and aryloxides and aryl and alkyl magnesium halides, with the halogen-free organomagnesium compounds being more desirable.

Halide sources include active non-metallic halides, metallic halides, and hydrogen chloride. Suitable non-metallic halides are represented by the formula R'X, wherein R' is hydrogen or an active monovalent organic radical, and X is a halogen. Particularly suitable non-metallic halides include, for example, hydrogen halides and active organic halides, such as t-alkyl halides, allyl halides, benzyl halides and other active hydrocarbyl halides. By an active organic halide is meant a hydrocarbyl halide that contains a labile halogen at least as active, i.e., as easily lost to another compound, as the halogen of sec-butyl chloride, preferably as active as t-butyl chloride. In addition to the organic monohalides, it is understood that organic dihalides, trihalides and other polyhalides that are active, as defined hereinbefore, are also suitably employed. Examples of preferred active non-metallic halides, include hydrogen chloride, hydrogen bromide, t-butyl chloride, t-amyl bromide, allyl chloride, benzyl chloride, crotyl chloride, methylvinyl carbinyl chloride, a-phenylethyl bromide, diphenyl methyl chloride. Most preferred are hydrogen chloride, t-butyl chloride, allyl chloride and benzyl chloride.

Suitable metallic halides include those represented by the formula MRy-a Xa, wherein: M is a metal of Groups IIB, IIIA or IVA of Mendeleev's periodic Table of Elements; R is a monovalent organic radical; X is a halogen; y has a value corresponding to the valence of M; and "a" has a value from 1 to y. Preferred metallic halides are aluminum halides of the formula $AlR_{3-a}$ $X_a$, wherein each R is independently hydrocarbyl, such as alkyl; X is a halogen; and a is a number from 1 to 3. Most preferred are alkylaluminum halides, such as ethylaluminum sesquichloride, diethylaluminum chloride, ethylaluminum dichloride, and diethylaluminum bromide, with ethylaluminum dichloride being especially preferred. Alternatively, a metal halide, such as aluminum trichloride, or a combination of aluminum trichloride with an alkyl aluminum halide, or a trialkyl aluminum compound may be suitably employed.

Any of the conventional Ziegler-Natta transition metal compounds can be usefully employed, as the transition metal component in preparing the supported catalyst component. Typically, the transition metal component is a compound of a Group IVB, VB, or VIB metal. The transition metal component is generally, represented by the formulas: $TrX'_{4-q}$ (OR1)q, $TrX'_{4-q}$ (R2)q, $VOX'_3$ and $VO(OR)_3$.

Tr is a Group IVB, VB, or VIB metal, preferably a Group IVB or VB metal, preferably titanium, vanadium or zirconium; q is 0 or a number equal to, or less than, 4; X' is a halogen, and $R^1$ is an alkyl group, aryl group or cycloalkyl group having from 1 to 20 carbon atoms; and R2 is an alkyl group, aryl group, aralkyl group, substituted aralkyls, and the like.

The aryl, aralkyls and substituted aralkys contain 1 to 20 carbon atoms, preferably 1 to 10 carbon atoms. When the transition metal compound contains a hydrocarbyl group, R2, being an alkyl, cycloalkyl, aryl, or aralkyl group, the hydrocarbyl group will preferably not contain an H atom in the position beta to the metal carbon bond. Illustrative, but non-limiting, examples of aralkyl groups are methyl, neopentyl, 2,2-dimethylbutyl, 2,2-dimethylhexyl; aryl groups such as benzyl; cycloalkyl groups such as 1-norbomyl. Mixtures of these transition metal compounds can be employed if desired.

Illustrative examples of the transition metal compounds include $TiCl_4$, $TiBr_4$, $Ti(OC_2H_5)_3Cl$, $Ti(OC_2H_5)Cl_3$, $Ti(OC_4H_9)_3Cl$, $Ti(OC_3H_7)_2Cl._2$, $Ti(OC_6Hi_3)_2Cl_2$, $Ti(OC_8H_{17})_2Br_2$, and $Ti(OC_{12}H_{25})Cl_3$, $Ti(O\text{-}iC_3H_7)_4$, and $Ti(O\text{-}nC_4H_9)_4$. Illustrative examples of vanadium compounds include $VCl_4$, $VOCl_3$, $VO(OC_2H_5)_3$, and $VO(OC_4H_9)_3$. Illustrative examples of zirconium compounds include $ZrCl_4$, $ZrCl_3(OC_2H_5)$, $ZrCl_2(OC_2H_5)_2$, $ZrCl(OC_2H_5)_3$, $Zr(OC_2H_5)_4$, $ZrCl_3(OC_4H_9)$, $ZrCl_2(OC_4H_9)_2$, and $ZrCl(OC_4H_9)3$.

An inorganic oxide support may be used in the preparation of the catalyst, and the support may be any particulate oxide, or mixed oxide which has been thermally or chemically dehydrated, such that it is substantially free of adsorbed moisture. See U. S. Pat Nos. 4,612,300; 4,314,912; and 4,547,475.

*Co-catalyst Component*

The above described catalyst systems can be rendered catalytically active by contacting it to, or combining it with, the activating co-catalyst, or by using an activating technique, such as those known in the art, for use with metal-based olefin polymerization reactions. Suitable activating co-catalysts, for use herein, include alkyl aluminums; polymeric or oligomeric alumoxanes (also known as aluminoxanes); neutral Lewis acids; and non-polymeric, non-coordinating, ion-forming compounds (including the use of such compounds under oxidizing conditions). A suitable activating technique is bulk electrolysis. Combinations of one or more of the foregoing activating co-catalysts and techniques are also contemplated. The term "alkyl aluminum" means a monoalkyl aluminum dihydride or monoalkylaluminum dihalide, a dialkyl

aluminum hydride or dialkyl aluminum halide, or a trialkylaluminum. Aluminoxanes and their preparations are known at, for example, U.S. Patent 6,103,657. Examples of preferred polymeric or oligomeric alumoxanes are methylalumoxane, triisobutylaluminum-modified methylalumoxane, and isobutylalumoxane.

Exemplary Lewis acid activating co-catalysts are Group 13 metal compounds containing from 1 to 3 hydrocarbyl substituents as described herein. In some embodiments, exemplary Group 13 metal compounds are tri(hydrocarbyl)-substituted-aluminum or tri(hydrocarbyl)-boron compounds. In some other embodiments, exemplary Group 13 metal compounds are tri(hydrocarbyl)-substituted-aluminum or tri(hydrocarbyl)-boron compounds are tri((C1-C10)alkyl)aluminum or tri((C6-C18)aryl)boron compounds and halogenated (including perhalogenated) derivatives thereof. In some other embodiments, exemplary Group 13 metal compounds are tris(fluoro-substituted phenyl)boranes, in other embodiments, tris(pentafluorophenyl)borane. In some embodiments, the activating co-catalyst is a tris((C1-C20)hydrocarbyl) borate (e.g., trityl tetrafluoroborate) or a tri((C1-C20)hydrocarbyl)ammonium tetra((C1-C20)hydrocarbyl)borane (e.g., bis(octadecyl)methylammonium tetrakis(pentafluorophenyl)borane). As used herein, the term "ammonium" means a nitrogen cation that is a ((C1-C20)hydrocarbyl)4N+, a ((C1-C20)hydrocarbyl)3N(H)+, a ((C1-C20)hydrocarbyl)2N(H)2+, (C1-C20)hydrocarbylN(H)3+, or N(H)4+, wherein each (C1-C20)hydrocarbyl may be the same or different.

Exemplary combinations of neutral Lewis acid activating co-catalysts include mixtures comprising a combination of a tri((C1-C4)alkyl)aluminum and a halogenated tri((C6-C18)aryl)boron compound, especially a tris(pentafluorophenyl)borane. Other exemplary embodiments are combinations of such neutral Lewis acid mixtures with a polymeric or oligomeric alumoxane, and combinations of a single neutral Lewis acid, especially tris(pentafluorophenyl)borane with a polymeric or oligomeric alumoxane. Exemplary embodiments ratios of numbers of moles of (metal-ligand complex):(tris(pentafluoro-phenylborane): (alumoxane) [e.g., (Group 4 metal-ligand complex):(tris(pentafluoro-phenylborane):(alumoxane)] are from 1:1:1 to 1:10:30, other exemplary embodiments are from 1:1:1.5 to 1:5:10.

Many activating co-catalysts and activating techniques have been previously taught, with respect to different metal-ligand complexes, in the following U.S. patents: US 5,064,802; US 5,153,157; US 5,296,433; US 5,321,106; US 5,350,723; US 5,425,872; US 5,625,087; US 5,721,185; US 5,783,512; US 5,883,204; US 5,919,983; US 6,696,379; and US 7,163,907. Examples of suitable hydrocarbyloxides are disclosed in US 5,296,433. Examples of suitable Bronsted acid salts for addition polymerization catalysts are disclosed in US 5,064,802; US 5,919,983; US 5,783,512. Examples of suitable salts of a cationic oxidizing agent and a non-coordinating, compatible anion, as activating co-catalysts for addition polymerization catalysts, are disclosed in US 5,321,106. Examples of suitable carbenium salts as activating co-catalysts for addition polymerization catalysts are disclosed in US 5,350,723. Examples of suitable silylium salts, as activating co-catalysts for addition polymerization catalysts, are disclosed in US 5,625,087. Examples of suitable complexes of alcohols, mercaptans, silanols, and oximes with tris(pentafluorophenyl)borane are disclosed in US 5,296,433. Some of these catalysts are also described in a portion of US 6,515,155 B1, beginning at column 50, at line 39, and going through column 56, at line 55.

In some embodiments, the above described catalyst systems can be activated to form an active catalyst composition by combination with one or more cocatalyst, such as a cation forming cocatalyst, a strong Lewis acid, or a combination thereof. Suitable cocatalysts for use include polymeric or oligomeric aluminoxanes, especially methyl aluminoxane, as well as inert, compatible, noncoordinating, ion forming compounds. Exemplary suitable cocatalysts include, but are not limited to, modified methyl aluminoxane (MMAO), bis(hydrogenated tallow alkyl)methyl, tetrakis(pentafluorophenyl)borate(1-) amine, triethyl aluminum (TEA), and any combinations thereof.

In some embodiments, one or more of the foregoing activating co-catalysts are used in combination with each other. In one embodiment, a combination of a mixture of a tri((C1-C4)hydrocarbyl)aluminum, tri((C1-C4)hydrocarbyl)borane, or an ammonium borate with an oligomeric or polymeric alumoxane compound, can be used.

In some embodiments, the first layer may further comprise other polymers in addition to the first composition. For example, in some embodiments, in addition to the first composition described above, the first layer may further comprise low density polyethylene (LDPE), medium density polyethylene (MDPE), and linear low density polyethylene (LLDPE). For example, LDPE can be included in the first layer to facilitate processing. In some embodiments where LDPE is used in the first layer, the resin can comprise 1 to less than 50 weight percent of LDPE based on the total weight of the first layer. In some embodiments where LDPE is used in the first layer, the first layer can comprise 5 to 20 weight percent of LDPE based on the total weight of the first layer. Examples of commercially available LDPE can be used in some embodiments of the present invention include, LDPE available from The Dow Chemical Company, such as DOW™ LDPE 132I, DOW™ LDPE 203M, and DOW™ 586A.

Small amounts of other polymers can also be used in some embodiments. In some embodiments, such polymers can be provided in amounts of less than 5 weight percent.

The first layer can be prepared from the components discussed above using techniques known to those of skill in the art based on the teachings herein. In some embodiments, the components of the first layer can be melt blended and formed into pellets. Such pellets can then be provided to film converters for use in a layer in a multilayer film. In some embodiments, the components can be blended inline in an extruder or similar film forming apparatus to form a layer in a multilayer film.

Second Layer

In describing a second layer of the multilayer film, it should be understood that the term "second" is used to identify the layer within the context of the other layers in the film.

As discussed above, the second layer comprises a polyethylene having a density of greater than 0.950 g/cm$^3$ (e.g., a high density polyethylene, HDPE) and a melt index ($I_2$) of less than 2.0 g/10 minutes. The HDPE has a density from greater than 0.950 to 0.970 g/cm$^3$ in some embodiments. In further embodiments, the HDPE may have a density from 0.955 to 0.970 g/cm$^3$, or from 0.960 to 0.970 g/cm$^3$. In some embodiments, the HDPE has a melt index ($I_2$ or I2; at 190°C / 2.16kg) from 0.1 to 2.0 g/10 minutes, for example from 0.1 to 1.8 g/10 minutes, or from 0.1 to 1.5 g/10 minutes, or from 0.1 to 1.0 g/10 minutes. For example, the melt index ($I_2$ or I2; at 190°C / 2.16 kg) can be from a lower limit of 0.1, 0.2, 0.5, or 0.7 g/10 minutes, to an upper limit of 1.0, 1.2, 1.4, 1.5, 1.7, 1.8, or 2.0 g/10 minutes.

Various methodologies are contemplated for producing the HDPE, a polyethylene copolymer produced from the polymerization of ethylene and one or more $\alpha$-olefin comonomers in the presence of one or more catalysts, such as a Ziegler-Natta catalyst, a Phillips catalyst, a metallocene catalyst, a post-metallocene catalyst, a CGC catalyst, or a BPP complex catalyst. In a specific embodiment, the HDPE may be produced from metallocene catalysts. The $\alpha$-olefin comonomers may include $C_3$-$C_{12}$ olefin monomers. In one embodiment, the $\alpha$-olefin comonomer in the HDPE is 1-octene. Various commercial HDPE products are considered suitable including, for example, ELITE™ 5960G which is an enhanced polyethylene commercially available from The Dow Chemical Company. Non-limiting examples of other commercially available HDPE products that can be used, in some embodiments, include those having a high density (e.g., at least 0.960 g/cm$^3$) and a melt index ($I_2$) of at least 0.7 g/10 minutes.

In some embodiments, the second layer comprises at least 40 percent by weight of the polyethylene having a density of greater than 0.950 g/cm$^3$ (e.g., a high density polyethylene, HDPE) and a melt index ($I_2$) of less than 2.0 g/10 minutes based on the weight of the second layer. The second layer, in some embodiments, comprises 40 to 99 weight percent of the HDPE based on the weight of the second layer. In some embodiments, the second layer comprises 50 to 99 weight percent of the HDPE, based on the weight of the second layer. In some embodiments, the second layer comprises at least 60 weight percent of the HDPE, based on the weight of the second layer. In some embodiments, the second layer comprises at least 70 weight percent of the HDPE, based on the weight of the second layer. In some embodiments, the second layer comprises at least 80 weight percent of the HDPE, based on the weight of the second layer.

The polyethylene having a density of greater than 0.950 g/cm$^3$ and a melt index ($I_2$) of less than 2.0 g/10 minutes can be used in other layers in the multilayer film according to some embodiments of the present invention. In some embodiments, the multilayer film overall comprises at least 15 weight percent of such HDPE based on the total weight of the multilayer film. The multilayer film, in some embodiments, comprises at least 30 weight percent of such HDPE based on the total weight of the multilayer film. The multilayer film, in some embodiments, comprises at least 40 weight percent of such HDPE based on the total weight of the multilayer film.

In some embodiments, the second layer may further comprise other polymers in addition to the polyethylene having a density of greater than 0.950 g/cm$^3$ and a melt index ($I_2$) of less than 2.0 g/10 minutes. For example, in some embodiments, in addition to such HDPE described above, the second layer may further comprise low density polyethylene (LDPE). For example, LDPE can be included in the second layer to facilitate processing. In some embodiments where LDPE is used in the second layer, the resin can comprise 1 to less than 60 weight percent of LDPE based on the total weight of the first layer. In some embodiments where LDPE is used in the first layer, the first layer can comprise 1 to less than 50 weight percent of LDPE based on the total weight of the first layer. In some embodiments where LDPE is used in the first layer, the first layer can comprise 5 to 20 weight percent of LDPE based on the total weight of the first layer. Examples of commercially available LDPE can be used in some embodiments of the present invention include, LDPE available from The Dow Chemical Company, such as DOW™ LDPE 132I, DOW™ LDPE 586A, and DOW LDPE 203M.

Small amounts of other polymers can also be used in some embodiments. In some embodiments, such polymers can be provided in amounts of less than 5 weight percent.

Third Layer (Sealant Layer)

The multilayer film also comprises a third layer which is a sealant layer. The sealant layer can be used to form an article or package by using the sealant layer to adhere the film to another film, to a laminate, or to itself. The sealant layer is thus an outermost layer of the multilayer film.

In some embodiments, the sealant layer can comprise any resins known to those having ordinary skill in the art to be useful as a sealant layer.

The sealant layer, in some embodiments, may comprise one or more ethylene-based polymers having a density from 0.900 to 0.925 g/cm$^3$ and a melt index ($I_2$) from 0.1 to 2.0 g/10 min. In further embodiments, the ethylene-based polymer of the sealant film (or sealant layer) may have a density from 0.910 to 0.925 g/cm$^3$, or 0.915 to 0.925 g/cm$^3$.

Additionally, the ethylene-based polymer of the sealant film (or sealant layer) may have a melt index ($I_2$) from 0.1 to 2.0 g/10 min, or from 0.1 to 1.5 g/10 min. Various commercial polyethylenes are considered suitable for the sealant film. Suitable commercial examples may include ELITE™ 5400G and ELITE™ 5401B, both of which are available from The Dow Chemical Company (Midland, MI).
In further embodiments, the sealant layer of a multilayer film, may comprise additional ethylene based polymers, for example, a polyolefin plastomer, LDPE, LLDPE, and others. The LDPE of the sealant film or sealant layer may generally include any LDPE known to those of skill in the art including, for example, DOW™ LDPE 132I and DOW™ LDPE 586A. In embodiments utilizing a polyolefin plastomer, the polyolefin plastomer may have a melt index ($I_2$) of 0.2 to 5 g/10 min, or from 0.5 to 2.0 g/10 min. Moreover, the polyolefin plastomer may have a density of 0.890 g/cc to 0.920 g/cc, or from 0.900 to 0.910 g/cm$^3$. Various commercial polyolefin plastomers are considered suitable for the sealant film. One suitable example is AFFINITY™ PL 1881G from The Dow Chemical Company (Midland, MI). In embodiments where the sealant layer includes LLDPE, the LLDPE may generally include any LLDPE known to those of skill in the art including, for example, those commercially available from The Dow Chemical Company such as DOWLEX™ NG2045B, DOWLEX™ TG2085B, DOWLEX™ GM 8051, DOWLEX™ GM 8070, DOWLEX™ GM 8085, and DOWLEX™ 5056G. Another example of ethylene based polymers that can be included are INNATE™ polyethylene resins having a density of 0.918 g/cm$^3$ or less, commercially available from The Dow Chemical Company as INNATE™ ST50 and INNATE™ TH60.

In some embodiments, the sealant layer comprises a blend of an ethylene-based polymers having a density from 0.900 to 0.925 g/cm$^3$ and a melt index ($I_2$) from 0.1 to 2.0 g/10 min and a polyolefin plastomer. For example, in some embodiments, such a blend can comprise ELITE™ 5400G or ELITE™ 5401B and AFFINITY™ PL 1881G.

In some embodiments, the sealant layer comprises a blend of an LLDPE and a polyolefin plastomer. For example, in some embodiments, such a blend can comprise DOWLEX™ NG 2045B or DOWLEX™ GM 8051 and AFFINITY™ PL 1881G.

Other Layers

In some embodiments, the multilayer film can include other layers in addition to the first layer, the second layer, and the sealant layer. In such embodiments, the sealant layer would be an outermost layer of the film (prior to sealing). The number of layers in the multilayer film can depend on a number of factors including, for example, the desired properties of the film, the end use application, the desired thickness of the film, and others.

Multilayer films of the present invention comprise up to 13 layers in some embodiments. In various embodiments, the multilayer film comprises 3, 4, 5, 6, 7, 8, 9, 10, 11, 12, or 13 layers.

In some embodiments, the multilayer film is a four layer film. In one such embodiment, the fourth layer comprises at least 50 percent by weight of the first composition (as described above in connection with the first layer) based on the weight of the fourth layer. In such embodiments, in addition to the first composition, the fourth layer may further comprise any of the other polymers described above in connection with the first layer. The second layer (comprising the HDPE discussed above) is located between the first layer and the fourth layer in such embodiments, with the third (sealant) layer being an outer layer of the multilayer film.

In some embodiments, the multilayer film is a five layer film, with the fourth layer as described in the preceding paragraph (i.e., comprising at least 50 percent by weight of the first composition). In some such embodiments, the fifth layer comprises at least 50 percent by weight of the HDPE (described above in connection with the second layer). In such embodiments, in addition to the HDPE, the fifth layer may further comprise any of the other polymers described above in connection with the second layer. In some such embodiments, the multilayer film overall comprises at least 40 weight percent of the HDPE based on the weight of the multilayer film.

With the third (sealant) layer being an outer layer, the order of the other layers is not critical. In some embodiments, the first layer and the fourth layer are not adjacent to each other, and the second layer and the fifth layer are also not adjacent to each other. For example, one exemplary film structure is third (sealant) layer/first layer/second layer/fourth layer/fifth layer. Another exemplary film structure is third (sealant) layer/second layer/first layer/fifth layer/fourth layer.

As discussed further herein, the total amount of the first composition and the total amount of the HDPE (described above in connection with the 2$^{nd}$ layer) in the multilayer film, as well as keeping significant amounts of those polymers in separate layers, can be important and is believed to contribute certain film properties discussed herein. In some embodiments, the multilayer film comprises at least 29 weight percent of the first composition based on the total weight of the film, and at least 15 weight percent of the HDPE based on the total weight of the film. In some embodiments, the multilayer film comprises at least 30 weight percent of the HDPE based on the total weight of the film. In some embodiments, the multilayer film comprises at least 15 weight percent of the HDPE and at least 60 weight percent of the first composition, based on the total weight of the film.

Additives

It should be understood that any of the foregoing layers can further comprise one or more additives as known to those of skill in the art such as, for example, antioxidants, ultraviolet light stabilizers, nucleating agents, thermal stabilizers, slip agents, antiblock, pigments or colorants, processing aids, crosslinking catalysts, flame retardants, fillers and foaming agents. For example, in some embodiments, the layers comprising the first composition or the HDPE can comprise up to 10 weight percent of a pigment, or up to 7 weight percent pigment in some embodiments, or up to 5 weight percent pigment in some embodiments.

In some embodiments, the multilayer film is advantageously comprises almost entirely of ethylene-based polymers. For example, in some embodiments, other than additives, the multilayer film is comprised entirely of ethylene-based polymers. Based on the total weight of the multilayer film, the multilayer film may include 90% by weight ethylene-based polymer in some embodiments, or 95% by weight ethylene-based polymer in some embodiments, or 99% by weight ethylene-based polymer in some embodiments, or 99.9% by weight ethylene-based polymer in some embodiments, or 100% by weight ethylene-based polymer in some embodiments.

The multilayer film does not include polyamide.

The multilayer film has an overall density from 0.924 to 0.940 g/cm$^3$.

In some embodiments, the multilayer film has a total thickness of less than 120 microns. The multilayer film has a total thickness of less than 80 microns in some embodiments. As discussed further below, the ability provide desirable film properties at such thicknesses is advantageous.

Multilayer films of the present invention can exhibit one or more desirable properties. For example, in some embodiments, multilayer films can exhibit desirable dart impact values, tear strength, grease migration resistance, barrier properties, and/or others.

In some embodiments, a multilayer film of the present invention can exhibit an average time for failure due to grease migration (grease permeation resistance) of greater than 75 hours when measured according to ASTM F-119 at 60° C at a film thickness of 100 microns. In some embodiments, a multilayer film of the present invention can exhibit an average time for failure due to grease migration (grease permeation resistance) of greater than 100 hours when measured according to ASTM F-119 at 60° C at a film thickness of 100 microns.

In some embodiments, a multilayer film of the present invention can exhibit a dart impact of greater than 700 grams when measured according to ASTM D-1709 (Method B) at a film thickness of 100 microns. In some embodiments, a multilayer film of the present invention can exhibit a dart impact of greater than 800 grams when measured according to ASTM D-1709 (Method B) at a film thickness of 100 microns. In some embodiments, a multilayer film of the present invention can exhibit a dart impact of greater than 400 grams when measured according to ASTM D-1709 (Method B) at a film thickness of 75 microns.

In some embodiments, a multilayer film of the present invention can exhibit a tear (Elmendorf) value in the machine direction of greater than 400 grams when measured according to ASTM D-1922 at a film thickness of 75 microns.

In some embodiments, a multilayer film of the present invention can exhibit a water vapor transmission rate of less than 1.4 g/(m$^2$*day) when measured according to ASTM E-398 at 38° C, 100% relative humidity, and a film thickness of 75 microns.

In some embodiments, a multilayer film of the present invention can exhibit a 2% secant modulus in the machine direction of at least 280 MPa when measured according to ASTM D882. In some embodiments, a multilayer film of the present invention can exhibit a 2% secant modulus in the machine direction of at least 350 MPa when measured according to ASTM D882, or at least 400 MPa in other embodiments.

Various embodiments of multilayer films of the present invention may exhibit one or more of the foregoing properties.

For example, in some embodiments, a multilayer film comprises (a) a first layer comprising a first composition, wherein the first composition comprises at least one ethylene-based polymer and wherein the first composition has a density of less than 0.935 g/cm$^3$, a melt index ($I_2$) of less than 2.0 g/10 minutes, a MWCDI value greater than 0.9, and a melt index ratio ($I_{10}/I_2$) that meets the following equation: $I_{10}/I_2 \geq 7.0 - 1.2 \times \log(I_2)$, wherein the first layer comprises at least 50 percent by weight of the first composition based on the weight of the first layer; (b) a second layer comprising a first polyethylene having a density of greater than 0.950 g/cm$^3$ and a melt index ($I_2$) of less 2.0 g/10 minutes, wherein the second layer comprises at least 40 percent by weight of the first polyethylene based on the weight of the second layer; (c) a third layer which is a sealant layer; and (d) a fourth layer comprising at least 50 percent by weight of the first composition based on the weight of the fourth layer, wherein the multilayer film comprises at least 29 weight percent of the first composition based on the total weight of the film, and wherein the multilayer film comprises at least 15 weight percent of the first polyethylene based on the total weight of the film. In some embodiments, such a film has an average time for failure due to grease migration of greater than 100 hours when measured according to ASTM F-119 at 60° C at a film thickness of 100 microns, and a dart impact of greater than 700 grams when measured according to ASTM D-1709 (Method B) at a film thickness of 100 microns. In some embodiments, such a film further comprises a fifth layer.

As another example, in some embodiments, a multilayer film comprises (a) a first layer comprising a first composition, wherein the first composition comprises at least one ethylene-based polymer and wherein the first composition has a density of less than 0.935 g/cm$^3$, a melt index ($I_2$) of less than 2.0 g/10 minutes, a MWCDI value greater than 0.9, and a melt index ratio ($I_{10}/I_2$) that meets the following equation: $I_{10}/I_2 \geq 7.0 - 1.2 \times \log(I_2)$, wherein the first layer comprises at least 50 percent by weight of the first composition based on the weight of the secoond layer; (b) a second layer comprising a first polyethylene having a density of greater than 0.950 g/cm$^3$ and a melt index ($I_2$) of less 2.0 g/10 minutes, wherein the second layer comprises at least 40 percent by weight of the first polyethylene based on the weight of the second layer; (c) a third layer which is a sealant layer; (d) a fourth layer comprising at least 50 percent by weight of the first composition based on the weight of the fourth layer; and (e) a fifth layer comprising at least 50 percent by weight of the first polyethylene based on the weight of the fifth layer, wherein the multilayer film comprises at least 29 weight percent of the first composition based on the total weight of the film, and wherein the multilayer film comprises at least 40 weight percent of the first polyethylene based on the total weight of the film. In some embodiments, such a film has a dart impact of greater than 400 grams when measured according to ASTM D-1709 (Method B) at a film thickness of 75 microns, a tear value in the machine direction of greater than 400 grams when measured according to ASTM D-1922 at a film thickness of 75 microns, and a water vapor transmission rate of less than 1.4 g/(m$^2$*day) when measured according to ASTM E-398 at 38° C, 100% relative humidity, and a film thickness of 75 microns.

Multilayer films can be coextruded as blown films using techniques known to those of skill in the art based on the teachings herein. In particular, based on the compositions of the different film layers disclosed herein, blown film manufacturing lines and cast film manufacturing lines can be configured to coextrude multilayer films of the present invention in a single extrusion step using techniques known to those of skill in the art based on the teachings herein.

Laminates

Embodiments of the present invention also comprise laminates incorporating multilayer films of the present invention. For example, the multilayer film can be laminated to a second film. In some embodiments, the second film has the same structure as the multilayer film. In some embodiments, the second film is comprised almost entirely of olefin-based-polymer. In some embodiments, the second film is comprised almost entirely of ethylene-based polymers. For example, in some embodiments, other than additives, the second film is comprised entirely of ethylene-based polymers. Based on the total weight of the second film, the second film may include 90% by weight ethylene-based polymer in some embodiments, or 95% by weight ethylene-based polymer in some embodiments, or 99% by weight ethylene-based polymer in some embodiments, or 99.9% by weight ethylene-based polymer in some embodiments, or 100% by weight ethylene-based polymer in some embodiments.

The laminate can be formed using techniques known to those having ordinary skill in the art based on the teachings herein. For example, the multilayer film can be laminated to the second film using an adhesive. Various adhesive compositions are considered suitable for the adhesives used to make a laminate. These may include polyurethane, epoxy, acrylic. In one embodiment, the laminate may comprises adhesive layers comprising polyurethane adhesive. The polyurethane adhesive may be solventless, waterborne or solvent based. Furthermore, the polyurethane adhesive may be a two part formulation. The weight or thickness of the adhesive layer can depend on a number of factors including, for example, the desired thickness of the multilayer structure, the type of adhesive used, and other factors. In some embodiments, the adhesive layer is applied at up to 5.0 grams/m$^2$, or from 1.0 to 4.0 g/m$^2$, or from 2.0 to 3.0 g/m$^2$.

Articles

Embodiments of the present invention also comprise articles, such as packages, formed from or incorporating multilayer films of the present invention (or laminates incorporating multilayer films of the present invention). Such packages can be formed from any of the inventive multilayer films (or laminates incorporating such inventive multilayer films) described herein.

Examples of such articles can include flexible packages, pouches, stand-up pouches, and pre-made packages or pouches. In some embodiments, multilayer films or laminates of the present invention can be used for food packages. Examples of food that can be included in such packages include meats, cheeses, cereal, nuts, juices, sauces, and others. Such packages can be formed using techniques known to those of skill in the art based on the teachings herein and based on the particular use for the package (e.g., type of food, amount of food).

TEST METHODS

Unless otherwise indicated herein, the following analytical methods are used in describing aspects of the present invention:

**Melt index**

Melt indices $I_2$ (or I2) and $I_{10}$ (or I10) were measured in accordance to ASTM D-1238 (method B) at 190°C and at 2.16 kg and 10 kg load, respectively. Their values are reported in g/10 min.

**Density**

Samples for density measurement were prepared according to ASTM D4703. Measurements were made, according to ASTM D792, Method B, within one hour of sample pressing.

**Dynamic Shear Rheology**

Each sample was compression-molded into "3 mm thick x 25 mm diameter" circular plaque, at 177°C, for five minutes, under 10 MPa pressure, in air. The sample was then taken out of the press and placed on a counter top to cool.

Constant temperature, frequency sweep measurements were performed on an ARES strain controlled rheometer (TA Instruments), equipped with 25 mm parallel plates, under a nitrogen purge. For each measurement, the rheometer was thermally equilibrated, for at least 30 minutes, prior to zeroing the gap. The sample disk was placed on the plate, and allowed to melt for five minutes at 190°C. The plates were then closed to 2 mm, the sample trimmed, and then the test was started. The method had an additional five minute delay built in, to allow for temperature equilibrium. The experiments were performed at 190°C, over a frequency range from 0.1 to 100 rad/s, at five points per decade interval. The strain amplitude was constant at 10%. The stress response was analyzed in terms of amplitude and phase, from which the storage modulus (G'), loss modulus (G"), complex modulus (G*), dynamic viscosity ($\eta$* or Eta*), and tan $\delta$ (or tan delta) were calculated.

**Conventional Gel Permeation Chromatography (conv. GPC)**

A GPC-IR high temperature chromatographic system from PolymerChar (Valencia, Spain), was equipped with a Precision Detectors (Amherst, MA), 2-angle laser light scattering detector Model 2040, an IR5 infra-red detector and a 4-capillary viscometer, both from PolymerChar. Data collection was performed using PolymerChar Instrument Control software and data collection interface. The system was equipped with an on-line, solvent degas device and pumping system from Agilent Technologies (Santa Clara, CA).

Injection temperature was controlled at 150 degrees Celsius. The columns used, were three, 10-micron "Mixed-B" columns from Polymer Laboratories (Shropshire, UK). The solvent used was 1,2,4-trichlorobenzene. The samples were prepared at a concentration of "0.1 grams of polymer in 50 milliliters of solvent." The chromatographic solvent and the sample preparation solvent each contained "200 ppm of butylated hydroxytoluene (BHT)." Both solvent sources were nitrogen sparged. Ethylene-based polymer samples were stirred gently at 160 degrees Celsius for three hours. The injection volume was "200 microliters,' and the flow rate was "1 milliliters/minute." The GPC column set was calibrated by running 21 "narrow molecular weight distribution" polystyrene standards. The molecular weight (MW) of the standards ranges from 580 to 8,400,000 g/mole, and the standards were contained in six "cocktail" mixtures. Each standard mixture had at least a decade of separation between individual molecular weights. The standard mixtures were purchased from Polymer Laboratories. The polystyrene standards were prepared at "0.025 g in 50 mL of solvent" for molecular weights equal to, or greater than, 1,000,000 g/mole, and at "0.050 g in 50 mL of solvent" for molecular weights less than 1,000,000 g/mole.

The polystyrene standards were dissolved at 80°C, with gentle agitation, for 30 minutes. The narrow standards mixtures were run first, and in order of decreasing "highest molecular weight component," to minimize degradation. The polystyrene standard peak molecular weights were converted to polyethylene molecular weight using Equation 1 (as described in Williams and Ward, J. Polym. Sci., Polym. Letters, 6, 621 (1968)):

$$\text{Mpolyethylene} = \text{A x (Mpolystyrene)}^{\text{B}} \quad \text{(Eqn. 1)},$$

where M is the molecular weight, A is equal to 0.4316 and B is equal to 1.0.

Number-average molecular weight (Mn(conv gpc)), weight average molecular weight (Mw-conv gpc), and z-average molecular weight (Mz(conv gpc)) were calculated according to Equations 2-4 below.

$$\mathrm{Mn(conv\ gpc)} = \frac{\sum_{i=RV_{integration\ start}}^{i=RV_{integration\ end}} \left(IR_{measurement\ channel_i}\right)}{\sum_{i=RV_{integration\ start}}^{i=RV_{integration\ end}} \left(IR_{measurement\ channel_i} / M_{PE_i}\right)} \quad \text{(Eqn. 2)}$$

$$\mathrm{Mw(conv\ gpc)} = \frac{\sum_{i=RV_{integration\ start}}^{i=RV_{integration\ end}} \left(M_{PE_i}\ IR_{measurement\ channel_i}\right)}{\sum_{i=RV_{integration\ start}}^{i=RV_{integration\ end}} \left(IR_{measurement\ channel_i}\right)} \quad \text{(Eqn. 3)}$$

$$\mathrm{Mz(conv\ gpc)} = \frac{\sum_{i=RV_{integration\ start}}^{i=RV_{integration\ end}} \left(M_{PE_i}^{\ 2}\ IR_{measurement\ channel_i}\right)}{\sum_{i=RV_{integration\ start}}^{i=RV_{integration\ end}} \left(M_{PE_i}\ IR_{measurement\ channel_i}\right)} \quad \text{(Eqn. 4)}$$

In Equations 2-4, the RV is column retention volume (linearly-spaced), collected at "1 point per second," the IR is the baseline-subtracted IR detector signal, in Volts, from the IR5 measurement channel of the GPC instrument, and $M_{PE}$ is the polyethylene-equivalent MW determined from Equation 1. Data calculation were performed using "GPC One software (version 2.013H)" from PolymerChar.

**Creep Zero Shear Viscosity Measurement Method**

Zero-shear viscosities were obtained via creep tests, which were conducted on an AR G2 stress controlled rheometer (TA Instruments; New Castle, Del), using "25-mm-diameter" parallel plates, at 190°C. The rheometer oven was set to test temperature for at least 30 minutes, prior to zeroing the fixtures. At the testing temperature, a compression molded sample disk was inserted between the plates, and allowed to come to equilibrium for five minutes. The upper plate was then lowered down to 50 μm (instrument setting) above the desired testing gap (1.5 mm). Any superfluous material was trimmed off, and the upper plate was lowered to the desired gap. Measurements were done under nitrogen purging, at a flow rate of 5 L/min. The default creep time was set for two hours. Each sample was compression-molded into a "2 mm thick x 25 mm diameter" circular plaque, at 177°C, for five minutes, under 10 MPa pressure, in air. The sample was then taken out of the press and placed on a counter top to cool.

A constant low shear stress of 20 Pa was applied for all of the samples, to ensure that the steady state shear rate was low enough to be in the Newtonian region. The resulting steady state shear rates were in the range from $10^{-3}$ to $10^{-4}$ $s^{-1}$ for the samples in this study. Steady state was determined by taking a linear regression for all the data, in the last 10% time window of the plot of "log (J(t)) vs. log(t)," where J(t) was creep compliance and t was creep time. If the slope of the linear regression was greater than 0.97, steady state was considered to be reached, then the creep test was stopped. In all cases in this study, the slope meets the criterion within one hour. The steady state shear rate was determined from the slope of the linear regression of all of the data points, in the last 10% time window of the plot of "ε vs. t," where ε was strain. The zero-shear viscosity was determined from the ratio of the applied stress to the steady state shear rate.

In order to determine if the sample was degraded during the creep test, a small amplitude oscillatory shear test was conducted before, and after, the creep test, on the same specimen from 0.1 to 100 rad/s. The complex viscosity values of the two tests were compared. If the difference of the viscosity values, at 0.1 rad/s, was greater than 5%, the sample was considered to have degraded during the creep test, and the result was discarded.

**Zero-Shear Viscosity Ratio** (ZSVR) is defined as the ratio of the zero-shear viscosity (ZSV) of the branched polyethylene material to the ZSV of a linear polyethylene material (see ANTEC proceeding below) at the equivalent weight average molecular weight (Mw(conv gpc)), according to the following Equation 5:

$$ZSVR = \frac{\eta_{0B}}{\eta_{0L}} = \frac{\eta_{0B}}{2.29^{-15} M_{w(conv \cdot gpc)}^{3.65}} \quad \text{(Eqn. 5).}$$

The ZSV value was obtained from creep test, at 190°C, via the method described above. The Mw(conv gpc) value was determined by the conventional GPC method (Equation 3), as discussed above. The correlation between ZSV of linear polyethylene and its Mw(conv gpc) was established based on a series of linear polyethylene reference materials. A description for the ZSV-Mw relationship can be found in the ANTEC proceeding: Karjala et al., Detection of Low Levels of Long-chain Branching in Polyolefins, Annual Technical Conference - Society of Plastics Engineers (2008), 66th 887-891.

## $^1$H NMR Method

A stock solution (3.26 g) was added to "0.133 g of the polymer sample" in 10 mm NMR tube. The stock solution was a mixture of tetrachloroethane-$d_2$ (TCE) and perchloroethylene (50:50, w:w) with 0.001M $Cr^{3+}$. The solution in the tube was purged with $N_2$, for 5 minutes, to reduce the amount of oxygen. The capped sample tube was left at room temperature, overnight, to swell the polymer sample. The sample was dissolved at 110°C with periodic vortex mixing. The samples were free of the additives that may contribute to unsaturation, for example, slip agents such as erucamide. Each $^1$H NMR analysis was run with a 10 mm cryoprobe, at 120°C, on Bruker AVANCE 400 MHz spectrometer.

Two experiments were run to get the unsaturation: the control and the double presaturation experiments. For the control experiment, the data was processed with an exponential window function with LB=1 Hz, and the baseline was corrected from 7 to -2 ppm. The signal from residual $^1$H of TCE was set to 100, and the integral $I_{total}$ from -0.5 to 3 ppm was used as the signal from whole polymer in the control experiment. The "number of $CH_2$ group, $NCH_2$," in the polymer was calculated as follows in Equation 1A:

$$NCH_2 = I_{total}/2 \quad \text{(Eqn. 1A).}$$

For the double presaturation experiment, the data was processed with an exponential window function with LB=1 Hz, and the baseline was corrected from about 6.6 to 4.5 ppm. The signal from residual $^1$H of TCE was set to 100, and the corresponding integrals for unsaturations ($I_{vinylene}$, $I_{trisubstituted}$, $I_{vinyl}$ and $I_{vinylidene}$) were integrated. It is well known to use NMR spectroscopic methods for determining polyethylene unsaturation, for example, see Busico, V., et al., Macromolecules, 2005, 38, 6988. The number of unsaturation unit for vinylene, trisubstituted, vinyl and vinylidene were calculated as follows:

$$N_{vinylene} = I_{vinylene}/2 \qquad \text{(Eqn. 2A),}$$

$$N_{trisubstituted} = I_{trisubstitute} \quad \text{(Eqn. 3A),}$$

$$N_{vinyl} = I_{vinyl}/2 \qquad \text{(Eqn. 4A),}$$

$$N_{vinylidene} = I_{vinylidene}/2 \quad \text{(Eqn. 5A).}$$

The unsaturation units per 1,000 carbons, all polymer carbons including backbone carbons and branch carbons, were calculated as follows:

$$N_{vinylene}/1{,}000C = (N_{vinylene}/NCH_2)*1{,}000 \qquad \text{(Eqn. 6A),}$$

$$N_{trisubstituted}/1{,}000C = (N_{trisubstituted}/NCH_2)*1{,}000 \qquad \text{(Eqn. 7A),}$$

$$N_{vinyl}/1{,}000C = (N_{vinyl}/NCH_2)*1{,}000 \qquad \text{(Eqn. 8A),}$$

$$N_{vinylidene}/1{,}000C = (N_{vinylidene}/NCH_2)*1{,}000 \qquad \text{(Eqn. 9A),}$$

The chemical shift reference was set at 6.0 ppm for the $^1$H signal from residual proton from TCE-d2. The control was run with ZG pulse, NS=4, DS=12, SWH=10,000 Hz, AQ=1.64s, D1=14s. The double presaturation experiment was run with a modified pulse sequence, with O1P = 1.354 ppm, O2P = 0.960 ppm, PL9 = 57db, PL21 = 70 db, NS = 100, DS = 4, SWH = 10,000 Hz, AQ = 1.64s, D1 = 1 s (where D1 is the presaturation time), D13 = 13s. Only the vinyl levels were reported in Table 2 below.

**$^{13}$C NMR Method**

Samples are prepared by adding approximately 3g of a 50/50 mixture of tetrachloroethane-d2/orthodichlorobenzene, containing 0.025 M Cr(AcAc)$_3$, to a "0.25 g polymer sample" in a 10 mm NMR tube. Oxygen is removed from the sample by purging the tube headspace with nitrogen. The samples are then dissolved, and homogenized, by heating the tube and its contents to 150°C, using a heating block and heat gun. Each dissolved sample is visually inspected to ensure homogeneity.

All data are collected using a Bruker 400 MHz spectrometer. The data is acquired using a 6 second pulse repetition delay, 90-degree flip angles, and inverse gated decoupling with a sample temperature of 120°C. All measurements are made on non-spinning samples in locked mode. Samples are allowed to thermally equilibrate for 7 minutes prior to data acquisition. The 13C NMR chemical shifts were internally referenced to the EEE triad at 30.0 ppm.

C13 NMR Comonomer Content: It is well known to use NMR spectroscopic methods for determining polymer composition. ASTM D 5017-96; J. C. Randall et al., in "NMR and Macromolecules" ACS Symposium series 247; J. C. Randall, Ed., Am. Chem. Soc., Washington, D.C., 1984, Ch. 9; and J. C. Randall in "Polymer Sequence Determination", Academic Press, New York (1977) provide general methods of polymer analysis by NMR spectroscopy.

**Molecular Weighted Comonomer Distribution Index (MWCDI)**

A GPC-IR, high temperature chromatographic system from PolymerChar (Valencia, Spain) was equipped with a Precision Detectors' (Amherst, MA) 2-angle laser light scattering detector Model 2040, and an IR5 infra-red detector (GPC-IR) and a 4-capillary viscometer, both from PolymerChar. The "15-degree angle" of the light scattering detector was used for calculation purposes. Data collection was performed using PolymerChar Instrument Control software and data collection interface. The system was equipped with an on-line, solvent degas device and pumping system from Agilent Technologies (Santa Clara, CA).

Injection temperature was controlled at 150 degrees Celsius. The columns used, were four, 20-micron "Mixed-A" light scattering columns from Polymer Laboratories (Shropshire, UK). The solvent was 1,2,4-trichlorobenzene. The samples were prepared at a concentration of "0.1 grams of polymer in 50 milliliters of solvent." The chromatographic solvent and the sample preparation solvent each contained "200 ppm of butylated hydroxytoluene (BHT)." Both solvent sources were nitrogen sparged. Ethylene-based polymer samples were stirred gently, at 160 degrees Celsius, for three hours. The injection volume was "200 microliters," and the flow rate was "1 milliliters/minute."

Calibration of the GPC column set was performed with 21 "narrow molecular weight distribution" polystyrene standards, with molecular weights ranging from 580 to 8,400,000 g/mole. These standards were arranged in six "cocktail" mixtures, with at least a decade of separation between individual molecular weights. The standards were purchased from Polymer Laboratories (Shropshire UK). The polystyrene standards were prepared at "0.025 grams in 50 milliliters of solvent" for molecular weights equal to, or greater than, 1,000,000 g/mole, and at "0.050 grams in 50 milliliters of solvent" for molecular weights less than 1,000,000 g/mole. The polystyrene standards were dissolved at 80 degrees Celsius, with gentle agitation, for 30 minutes. The narrow standards mixtures were run first, and in order of decreasing "highest molecular weight component," to minimize degradation. The polystyrene standard peak molecular weights were converted to polyethylene molecular weights using Equation 1B (as described in Williams and Ward, J. Polym. Sci., Polym. Let., 6, 621 (1968)):

$$\text{Mpolyethylene} = \text{A x (Mpolystyrene)}^{\text{B}} \quad \text{(Eqn. 1B)},$$

where M is the molecular weight, A has a value of approximately 0.40 and B is equal to 1.0. The A value was adjusted between 0.385 and 0.425 (depending upon specific column-set efficiency), such that NBS 1475A (NIST) linear polyethylene weight-average molecular weight corresponded to 52,000 g/mole, as calculated by Equation 3B, below:

$$\text{Mn(LALS gpc)} = \frac{\sum_{i=RV_{integration\ start}}^{i=RV_{integration\ end}} \left(IR_{measurement\ channel_i}\right)}{\sum_{i=RV_{integration\ start}}^{i=RV_{integration\ end}} \left(IR_{measurement\ channel_i} / M_{PE_i}\right)} \quad \text{(Eqn. 2B)}$$

$$\text{Mw(LALS gpc)} = \frac{\sum_{i=RV_{integration\ start}}^{i=RV_{integration\ end}} \left(M_{PE_i}\ IR_{measurement\ channel_i}\right)}{\sum_{i=RV_{integration\ start}}^{i=RV_{integration\ end}} \left(IR_{measurement\ channel_i}\right)} \quad \text{(Eqn. 3B)}$$

In Equations 2B and 3B, RV is column retention volume (linearly-spaced), collected at "1 point per second." The IR is the baseline-subtracted IR detector signal, in Volts, from the measurement channel of the GPC instrument, and the $M_{PE}$ is the polyethylene-equivalent MW determined from Equation 1B. Data calculation were performed using "GPC One software (version 2.013H)" from PolymerChar.

A calibration for the IR5 detector ratios was performed using at least ten ethylene-based polymer standards (polyethylene homopolymer and ethylene/octene copolymers; narrow molecular weight distribution and homogeneous comonomer distribution) of known short chain branching (SCB) frequency (measured by the $^{13}C$ NMR Method, as discussed above), ranging from homopolymer (0 SCB/1000 total C) to approximately 50 SCB/1000 total C, where total C = carbons in backbone + carbons in branches. Each standard had a weight-average molecular weight from 36,000 g/mole to 126,000 g/mole, as determined by the GPC-LALS processing method described above. Each standard had a molecular weight distribution (Mw/Mn) from 2.0 to 2.5, as determined by the GPC-LALS processing method described above. Polymer properties for the SCB standards are shown in Table A.

Table A: "SCB" Standards

| Wt % Comonomer | IR5 Area ratio | SCB / 1000 Total C | Mw | Mw/Mn |
|---|---|---|---|---|
| 23.1 | 0.2411 | 28.9 | 37,300 | 2.22 |
| 14.0 | 0.2152 | 17.5 | 36,000 | 2.19 |
| 0.0 | 0.1809 | 0.0 | 38,400 | 2.20 |
| 35.9 | 0.2708 | 44.9 | 42,200 | 2.18 |
| 5.4 | 0.1959 | 6.8 | 37,400 | 2.16 |
| 8.6 | 0.2043 | 10.8 | 36,800 | 2.20 |
| 39.2 | 0.2770 | 49.0 | 125,600 | 2.22 |
| 1.1 | 0.1810 | 1.4 | 107,000 | 2.09 |
| 14.3 | 0.2161 | 17.9 | 103,600 | 2.20 |
| 9.4 | 0.2031 | 11.8 | 103,200 | 2.26 |

The "IR5 Area Ratio (or "$IR5_{\text{Methyl Channel Area}}$ / IR5 Measurement Channel Area")" of "the baseline-subtracted area response of the IR5 methyl channel sensor" to "the baseline-subtracted area response of IR5 measurement channel sensor" (standard filters and filter wheel as supplied by PolymerChar: Part Number IR5_FWM01 included as part of the GPC-IR instrument) was calculated for each of the "SCB" standards. A linear fit of the SCB frequency versus the "IR5 Area Ratio" was constructed in the form of the following Equation 4B:

$$\text{SCB/1000 total C} = A_0 + [A_1 \text{ x } (IR5_{\text{Methyl Channel Area}} / IR5_{\text{Measurement Channel Area}})] \quad \text{(Eqn. 4B)},$$

where $A_0$ is the "SCB/1000 total C" intercept at an "IR5 Area Ratio" of zero, and $A_1$ is the slope of the "SCB/1000 total C" versus "IR5 Area Ratio," and represents the increase in the "SCB/1000 total C" as a function of "IR5 Area Ratio."

A series of "linear baseline-subtracted chromatographic heights" for the chromatogram generated by the "IR5 methyl channel sensor" was established as a function of column elution volume, to generate a baseline-corrected chromatogram (methyl channel). A series of "linear baseline-subtracted chromatographic heights" for the chromatogram generated by the "IR5 measurement channel" was established as a function of column elution volume, to generate a base-line-corrected chromatogram (measurement channel).

The "IR5 Height Ratio" of "the baseline-corrected chromatogram (methyl channel)" to "the baseline-corrected chromatogram (measurement channel)" was calculated at each column elution volume index (each equally-spaced index, representing 1 data point per second at 1 ml/min elution) across the sample integration bounds. The "IR5 Height Ratio" was multiplied by the coefficient $A_1$, and the coefficient $A_0$ was added to this result, to produce the predicted SCB frequency of the sample. The result was converted into mole percent comonomer, as follows in Equation 5B:

$$\text{Mole Percent Comonemer} = \{SCB_f / [SCB_f + ((100 - SCB_f * \text{Length of comonomer}) / 2)]\} * 100 \quad \text{(Eqn. 5B)},$$

where "$SCB_f$" is the "SCB per 1000 total C", and the "Length of comonomer" = 8 for octene, 6 for hexene, and so forth.

Each elution volume index was converted to a molecular weight value ($Mw_i$) using the method of Williams and Ward (described above; Eqn. 1B). The "Mole Percent Comonomer *(y axis)"* was plotted as a function of Log($Mw_i$), and the slope was calculated between $Mw_i$ of 15,000 and Mw, of 150,000 g/mole (end group corrections on chain ends were omitted for this calculation). An EXCEL linear regression was used to calculate the slope between, and including, $Mw_i$ from 15,000 to 150,000 g/mole. This slope is defined as the molecular weighted comonomer distribution index (MWCDI = Molecular Weighted Comonomer Distribution Index).

A representative determination of MWCDI is illustrated in WO2018/063578 at p. 33 and Figures 1-4.

**Film Testing Conditions**

The following physical properties were measured on the films produced (see Examples section):

**Grease Permeation Resistance**

Grease permeation resistance, or failure due to grease migration, is measured according to ASTM F-119 at 60° C at a film thickness of 100 microns.

**Dart Impact**

After the film was produced, it was conditioned for at least 40 hours at 23°C (+/-2°C) and 50% R.H (+/- 5), as per ASTM standards. Standard testing conditions are 23°C (+/- 2°C) and 50% R.H (+/- 5), as per ASTM standards.

The test result was reported by Method B, which uses a 2" diameter dart head and 60" drop height.

The sample thickness was measured at the sample center, and the sample then clamped by an annular specimen holder with an inside diameter of 5 inches. The dart was loaded above the center of the sample, and released by either a pneumatic or electromagnetic mechanism.

Testing was carried out according to the 'staircase' method. If the sample failed, a new sample was tested with the weight of the dart reduced by a known and fixed amount. If the sample did not fail, a new sample was tested with the weight of the dart increased by a known amount. After 20 specimens had been tested, the number of failures was determined. If this number was 10, then the test is complete. If the number was less than 10, then the testing continued, until 10 failures had been recorded. If the number was greater than 10, testing was continued, until the total of non-failures was 10. The dart impact value was determined from these data, as per ASTM D1709, and expressed in grams, as either the Dart Drop Impact of Type A (or dart impact value (Method A)) or the Dart Drop Impact of Type B (or dart impact value (Method B)), depending on whether Method A or Method B was used.

The terms "dart drop impact" and "dart impact" are used synonymously herein to refer to this test method.

**Elmendorf Tear**

Elmendorf tear resistance (or "tear") is measured in the machine direction (MD) and the transverse direction (TD) in accordance with ASTM D1922.

**Water Vapor Transmission Rate**

Water Vapor Transmission Rate is measured in accordance with ASTM E-398 at 38° C, 100% relative humidity, and a film thickness of 75 microns.

**Puncture Resistance**

Puncture resistance is measured in accordance with ASTM D-5748.

**Secant Modulus (2%)**

Secant modulus at 2% strain is measured in the machine direction (MD) and cross direction (CD) with an Instron Universal tester according to ASTM D882-12.

Some embodiments of the invention will now be described in detail in the following Examples.

**Examples**

The following examples illustrate the present invention, but are not intended to limit the scope of the invention.

First Composition 1 and First Composition 2

The embodiments of inventive multilayer films (Inventive Films 1-3) described in the Examples below utilize First Composition 1. While First Composition 2 is not used in these Examples, First Composition 2 could be substituted for First Composition 1 to form additional inventive multilayer films. First Composition 1 and First Composition 2 each comprise at least one ethylene-based polymer and have a MWCDI value greater than 0.9, and a melt index ratio ($I_{10}/I_2$) that meets the following equation: $I_{10}/I_2 \geq 7.0 - 1.2 \times \log(I_2)$. First Composition 1 and First Composition 2 each contain two ethylene-octene copolymers. Each composition was prepared, via solution polymerization, in a dual series loop reactor system according to U.S. Pat. No. 5,977,251 (see Figure 2 of this patent), in the presence of a first catalyst system, as described below, in the first reactor, and a second catalyst system, as described below, in the second reactor.

The first catalyst system comprised a bis((2-oxoyl-3-(dibenzo-1H-pyrrole-1-yl)-5-(methyl)phenyl)-2-phenoxymethyl)-methylene-1,2-cyclohexanediylhafnium (IV) dimethyl, represented by the following formula (CAT 1):

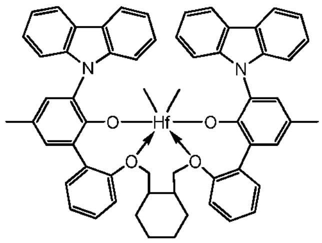

(CAT 1).

The molar ratios of the metal of CAT 1, added to the polymerization reactor, in-situ, to that of Cocat1 (bis(hydrogenated tallow alkyl)methyl,tetrakis(pentafluorophenyl)borate(1-) amine), or Cocat2 (modified methyl aluminoxane (MMAO)), are shown in Table 1.

The second catalyst system comprised a Ziegler-Natta type catalyst (CAT 2). The heterogeneous Ziegler-Natta type catalyst-premix was prepared substantially according to U.S. Pat. No. 4,612,300, by sequentially adding to a volume of ISOPAR E, a slurry of anhydrous magnesium chloride in ISOPAR E, a solution of EtAlCh in heptane, and a solution of $Ti(O\text{-}iPr)_4$ in heptane, to yield a composition containing a magnesium concentration of 0.20M, and a ratio of Mg/Al/Ti of 40/12.5/3. An aliquot of this composition was further diluted with ISOPAR-E to yield a final concentration of 500 ppm Ti in the slurry. While being fed to, and prior to entry into, the polymerization reactor, the catalyst premix was contacted with a dilute solution of $Et_3Al$, in the molar Al to Ti ratio specified in Table 1, to give the active catalyst.

The polymerization conditions for First Compositions 1 and 2 are reported in Table 1. As seen in Table 1, Cocat. 1 (bis(hydrogenated tallow alkyl)methyl,tetrakis(pentafluorophenyl)borate(1-) amine); and Cocat. 2 (modified methyl aluminoxane (MMAO)) were each used as a cocatalyst for CAT 1. Additional properties of First Compositions 1 and 2 are measured, and are reported in Table 2. Each polymer composition was stabilized with minor (ppm) amounts of stabilizers.

Table 1: Polymerization Conditions (Rx1 = reactor 1; Rx2 = reactor 2)

| Sample # | Units | First Composition 1 | First Composition 2 |
|---|---|---|---|
| Reactor Configuration | Type | Dual Series | Dual Series |
| Comonomer type | Type | 1-octene | 1-octene |
| First Reactor Feed Solvent / Ethylene Mass Flow Ratio | g/g | 5.5 | 4.0 |
| First Reactor Feed Comonomer / Ethylene Mass Flow Ratio | g/g | 0.39 | 0.47 |
| First Reactor Feed Hydrogen / Ethylene Mass Flow Ratio | g/g | 3.8E-04 | 3.0E-04 |
| First Reactor Temperature | °C | 140 | 165 |
| First Reactor Pressure | barg | 50 | 50 |
| First Reactor Ethylene Conversion | % | 86.7 | 83.2 |
| First Reactor Catalyst Type | Type | CAT 1 | CAT 1 |
| First Reactor Co-Catalyst1 Type | Type | Cocat. 1 | Cocat. 1 |
| First Reactor Co-Catalyst2 Type | Type | Cocat .2 | Cocat. 2 |
| First Reactor Co-Catalyst1 to Catalyst Molar Ratio (B to Hf ratio) | Ratio | 1.3 | 1.2 |

(continued)

| Sample # | Units | First Composition 1 | First Composition 2 |
|---|---|---|---|
| First Reactor Co-Catalyst2 Scavenger Molar Ratio (Al to Hf ratio) | Ratio | 20.2 | 30.1 |
| First Reactor Residence Time | min | 9.0 | 10.2 |
| Second Reactor Feed Solvent / Ethylene Mass Flow Ratio | g/g | 2.1 | 2.1 |
| Second Reactor Feed Comonomer / Ethylene Mass Flow Ratio | g/g | 0.067 | 0.112 |
| Second Reactor Feed Hydrogen / Ethylene Mass Flow Ratio | g/g | 1.9E-05 | 9.6E-06 |
| Second Reactor Temperature | °C | 195 | 195 |
| Second Reactor Pressure | barg | 50 | 51 |
| Second Reactor Ethylene Conversion | % | 87.1 | 83.3 |
| Second Reactor Catalyst Type | Type | CAT 2 | CAT 2 |
| Second Reactor Co-Catalyst Type | Type | $Et_3Al$ | $Et_3Al$ |
| Second Reactor Co-Catalyst to Catalyst Molar Ratio (Al to Ti ratio) | Ratio | 4.0 | 4.0 |
| Second Reactor Residence Time | min | 6.5 | 7.4 |
| *solvent = ISOPAR E | | | |

Table 2: Properties of First Composition 1 and First Composition 2

| | Unit | First Composition 1 | First Composition 2 |
|---|---|---|---|
| Density | g/cc | 0.9174 | 0.9117 |
| $I_2$ | g/10 min | 0.83 | 0.86 |
| $I_{10}/I_2$ | | 7.7 | 8.14 |
| 7.0 - 1.2xlog(I2) | | 7.1 | 7.08 |
| Mn (conv.gpc) | g/mol | 32,973 | 30,406 |
| Mw (conv.gpc) | | 117,553 | 115,271 |
| Mz (conv.gpc) | | 270,191 | 273,416 |
| Mw/Mn (conv.gpc) | | 3.57 | 3.79 |
| Mz/Mw (conv.gpc) | | 2.30 | 2.37 |
| Eta* (0.1 rad/s) | Pa•s | 9,496 | 11,139 |
| Eta* (1.0 rad/s) | Pa•s | 7,693 | 8,215 |
| Eta* (10 rad/s) | Pa•s | 4,706 | 4,704 |
| Eta* (100 rad/s) | Pa•s | 1,778 | 1,715 |
| Eta*0.1/ Eta*100 | | 5.34 | 6.5 |
| Eta zero | Pa•s | 11,210 | 13568 |
| MWCDI | | 2.64 | 2.86 |
| Vinyls | Per 1000 total Carbons | 134 | Not Measured |
| ZSVR | | 1.53 | 2.0 |

In addition to the First Composition above, the raw materials shown in Table 3 are used to prepare the Inventive Films and Comparative Films discussed below. Each of the resins are commercially available from the Dow Chemical Company unless noted otherwise.

Table 3

| Commercial Name | Type | $I_2$ (g/10min) | Density (g/cc) |
|---|---|---|---|
| DOWLEX™ TG2085B | LLDPE | 0.95 | 0.919 |
| DOWLEX™ NG 2049B | LLDPE | 1.0 | 0.926 |
| DOW™ LDPE 586A | LDPE | 3.0 | 0.923 |
| DOW™ HDPE NG7000 | HDPE | 10.5* | 0.949 |
| DOWLEX™ 2050B | HDPE | 0.95 | 0.950 |
| ELITE™ 5960G | HDPE (enhanced PE) | 0.85 | 0.962 |
| DOWLEX™ NG2045B | LLDPE | 1.0 | 0.920 |
| DOW Developmental HDPE | HDPE | 1.2 | 0.963 |
| AMPLIFY™ TY 1352 | Maleic Anhydride-grafted LLDPE | 1.0 | 0.922 |
| UBE 5034B Nylon 6 (UBE Industries, Ltd.) | Polyamide 6,6 | 4.08** | 1.14 |
| DOW™ LDPE 203M | LDPE | 0.3 | 0.922 |
| DOW™ LDPE 1321 | LDPE | 0.25 | 0.921 |
| ELITE™ 5401B | LLDPE (enhanced PE) | 1.0 | 0.918 |
| Ampacet white pigment, ("Ampacet $TiO_2$ MB") | 75% TiOz | 25 | 2.24 |
| * $I_{10}$ measured at 190° C and 21.6 kg<br>** Relative viscosity (96% $H_2SO_4$, 1.0 g/100 mL) | | | |

Comparative Films A-C

Comparative Films A-C are three-layer (A/B/A) coextruded films that are prepared as follows. Comparative Films A-C have the following structures:

Table 4

| Film | Structure |
|---|---|
| Comparative Film A | A: 70% DOWLEX™ TG2085B + 20% DOWLEX™ NG2049B + 10% DOW™ LDPE 586A<br>B: 60% DOW™ HDPE NG7000 + 40% DOWLEX™ NG2049B |
| Comparative Film B | A: 70% DOWLEX ™ TG2085B + 20% DOWLEX ™ NG2049B + 10% DOW™ LDPE 586A<br>B: 100% DOWLEX ™ 2050B |
| Comparative Film C | A: 70% DOWLEX ™ TG2085B + 20% DOWLEX ™ NG2049B + 10% DOW™ LDPE 586A<br>B: 100% ELITE™ 5960G |

The films are produced using a Dr. Collin 5-layer coextrusion blown film line. The line was comprised of five 25:1 L/D single screw extruders, equipped with grooved feed zones. Only three of the five extruders are used. Screw diameters are 25 mm for the two outer layers (formed from composition A) extruders and 30 mm for the inner layer extruder (formed from composition B). The die is 80 mm, and the die gap is 1.8 mm. The blow-up ratio is 2.5:1. The line speed is 5.0 meters/minute with an output rate of 15 kg/hour. The nominal thickness of each film is 90 microns with a layer distribution of A(25%)/B(50%)/C(25%).

Dart drop impact, secant modulus, puncture, and water vapor transmission rate are measured using the methods described above. The results are shown in Table 5.

Table 5

| Film | Overall Density ($g/cm^3$) | Dart Drop Impact, Method A (g) | Puncture Resistance ($J/cm^3$) | 2% Secant Modulus, MD (MPa) | WVTR (g/ ($m^2$*day)) |
|---|---|---|---|---|---|
| Comparative Film A | 0.930 | 329 | 9.5 | 302 | 2.44 |
| Comparative Film B | 0.936 | 221 | 5.9 | 402 | 2.25 |
| Comparative Film C | 0.940 | 176 | 4.3 | 467 | 1.91 |

The results indicate that an increase in film density results in an increase of secant modulus and a decrease in water vapor transmission rate. However, dart drop impact and puncture resistance each decrease with the increase in density, which is not acceptable for the packaging of certain types of products (e.g., pet food).

Comparative Films D-F

Comparative Films D-F are five-layer (A/B/C/B/A) coextruded films that are prepared as follows. Comparative Films D-F have the following structures:

Table 6

| Film | Structure |
|---|---|
| Comparative Film D | A: 80% DOWLEX™ NG2045B + 20% DOW™ LDPE 203M<br>B: 80% DOWLEX™ NG2045B + 20% DOW™ LDPE 203M<br>C: 100% DOWLEX™ 2050B |
| Comparative Film E | A: 80% DOWLEX™ NG2045B + 20% DOW™ LDPE 203M<br>B: 80% DOWLEX™ NG2045B + 20% DOW™ LDPE 203M<br>C: 100% DOW Developmental HDPE |
| Comparative Film F | A: 80% DOWLEX™ NG2045B + 20% DOW™ LDPE 203M<br>B: 100% AMPLIFY™ TY 1352<br>C: 100% UBE 5034B Nylon 6 |

The films are produced using a Dr. Collin 5-layer coextrusion blown film line. The line was comprised of five 25:1 L/D single screw extruders, equipped with grooved feed zones. Screw diameters for the 5 layers (A/B/C/B/A) were 30 mm/25 mm/25mm/25 mm/30 mm, respectively. The die is 80 mm, and the die gap is 1.8 mm. The blow-up ratio is 2.5:1. The line speed is 7.5 meters/minute with an output rate of 20 kg/hour. The nominal thickness of each film is 100 microns with a layer distribution of A(20%)/B (15 %)/C(30%)/B (15 %)/A(20%).

Mechanical properties (dart drop impact, secant modulus, Elmendorf tear, and puncture resistance) and barrier properties (grease migration and water vapor transmission rate) are measured using the methods described above. The results are shown in Table 7.

Table 7

| Film | Overall Density ($g/cm^3$) | Dart Drop Impact, Method B (g) | Puncture Resistance ($J/cm^3$) | Tear, MD (g) | 2% Secant Modulus, MD (MPa) | Grease Migration (hours) | WVTR (g/ ($m^2$*day)) |
|---|---|---|---|---|---|---|---|
| Comp. Film D | 0.929 | 345 | 18 | 820 | 458 | 182 | 2.7 |
| Comp. Film E | 0.933 | <300 | 14 | 527 | 573 | 264 | 1.3 |
| Comp. Film F | 0.977 | 908 | 21 | 1163 | 449 | >720 | 4.5 |

The results indicate that an increase in film density results in an increase of secant modulus, a decrease in water vapor transmission rate, and an increase in grease barrier. However, dart drop impact, Elmendorf tear, and puncture resistance

each decrease with the increase in density, which is not acceptable for the packaging of certain types of products (e.g., pet food).

It is known that polyamide delivers improved mechanical properties with an increase in film density; however, a film based on polyethylenes only with good mechanical and grease barrier properties would be desirable.

Comparative Film G and Inventive Film 1

Comparative Film G and Inventive Film 1 are five-layer (A/B/C/D/E) coextruded films that are prepared as follows. Comparative Film G and Inventive Film 1 have the following structures:

Table 8

| Film | Structure |
|---|---|
| Comparative Film G | A: 13% DOW™ LDPE 132I + 80% DOWLEX™ NG2045B + 7% Ampacet $TiO_2$ MB<br>B: 93% DOWLEX ™ TG 2085B + 7% Ampacet $TiO_2$ MB<br>C: 93% ELITE™ 5960 + 7% Ampacet $TiO_2$ MB<br>D: 100% DOWLEX ™ TG2085B<br>E (sealant): 20% DOW™ LDPE 132I + 80% ELITE™ NG5401B |
| Inventive Film 1 | A: 13% DOW™ LDPE 132I + 80% DOWLEX™ NG2045B + 7% Ampacet $TiO_2$ MB<br>B: 93% First Composition + 7% Ampacet $TiO_2$ MB<br>C: 93% ELITE™ 5960 + 7% Ampacet $TiO_2$ MB<br>D: 100% First Composition<br>E (sealant): 20% DOW™ LDPE 132I + 80% ELITE™ NG5401B |

The films are produced using a Dr. Collin 5-layer coextrusion blown film line. The line was comprised of four 25:1 L/D single screw extruders, equipped with grooved feed zones. Screw diameters for the 5 layers (A/B/C/B/A) were 30 mm/25 mm/25mm/25 mm/30 mm, respectively. The die is 80 mm, and the die gap is 1.8 mm. The blow-up ratio is 2.5:1. The line speed is 7.5 meters/minute with an output rate of 20 kg/hour. The nominal thickness of each film is 100 microns. Comparative Film G has a layer distribution of A(25%)/B(15%)/C(20%)/D(15%)/E(25%). Inventive Film 1 has a layer distribution of A(15%)/B(15%)/C(35%)/D(15%)/E(20%).

Mechanical properties (dart drop impact, secant modulus, and puncture resistance) and barrier properties (grease migration) are measured using the methods described above. The results are shown in Table 9.

Table 9

| Film | Overall Density ($g/cm^3$) | Dart Drop Impact, Method A (g) | Puncture Resistance ($J/cm^3$) | 2% Secant Modulus, MD (MPa) | Grease Migration (hours) |
|---|---|---|---|---|---|
| Comp. Film G | 0.927 | 572 | 10.2 | 291 | 72 |
| Inv. Film 1 | 0.932 | 716 | 10.5 | 378 | 115 |

The results indicate Inventive Film 1 (which is an embodiment of the present invention) delivers improved dart and puncture resistance, even at higher density, which is an unexpected result. The higher density also delivers higher modulus and grease barrier, which makes an excellent combination for packaging of certain types of products (e.g., pet food).

Comparative Film H and Inventive Film 2

Comparative Film H and Inventive Film 2 are five-layer (A/B/C/D/E) coextruded films that are prepared as follows. Comparative Film H and Inventive Film 2 have the following structures:

Table 10

| Film | Structure |
|---|---|
| Comparative Film H | A (sealant): 70% ELITE™ 5401B + 30% DOW™ LDPE 586A<br>B: 40% ELITE™ 5960G + 30% DOWLEX™ 2045G + 25% DOW™ LDPE 586A + 5% Ampacet $TiO_2$ MB<br>C: 40% ELITE™ 5960G + 30% DOWLEX™ 2045G + 25% DOW™ LDPE 586A + 5% Ampacet $TiO_2$ MB<br>D: 40% ELITE™ 5960G + 30% DOWLEX™ 2045G +25% DOW™ LDPE 586A +5% Ampacet TiOz MB<br>E: 30% ELITE™ 5960G + 48% DOWLEX™ 2045G + 17% DOW™ LDPE 132I + 5% Ampacet $TiO_2$ MB |
| Inventive Film 2 | A (sealant) - 70% ELITE™ 5401B + 30% DOW™ LDPE 586A<br>B - 95% First Composition + 5% Ampacet $TiO_2$ MB<br>C - 80% ELITE™ 5960G + 15% DOW™ LDPE 586A + 5% Ampacet $TiO_2$ MB<br>D - 95% First Composition + 5% Ampacet $TiO_2$ MB<br>E - 78% ELITE™ 5960G + 17% DOW™ LDPE 132I + 5% Ampacet $TiO_2$ MB |

The films are produced using a Carnevalli coextruder with a 350 mm die with internal bubble cooling (IBC). The blow-up ratio is 2.5:1. The output rate of 320 kg/hour. The nominal thickness of each film is 75 microns. Comparative Film H has a layer distribution of A(25%)/B(15%)/C(20%)/D(15%)/E(25%). Inventive Film 2 has a layer distribution of A(20%)/B(15%)/C(30%)/D(15%)/E(20%).

Mechanical properties (dart drop impact, Elmendorf tear, secant modulus, and puncture resistance) and barrier properties (grease migration and water vapor transmission rate) are measured using the methods described above. The results are shown in Table 11.

Table 11

| Film | Overall Density ($g/cm^3$) | Dart Drop Impact, Method A (g) | Puncture Resistance ($J/cm^3$) | Tear, MD (g) | 2% Secant Modulus, MD (MPa) | Grease Migration (hours) | WVTR (g/ ($m^2$*day)) |
|---|---|---|---|---|---|---|---|
| Comp. Film H | 0.931 | 164 | 6.3 | 296 | 330 | 58 | 1.88 |
| Inv. Film 2 | 0.936 | 475 | 6.4 | 409 | 419 | 77 | 1.41 |

The results indicate Inventive Film 2 (which is an embodiment of the present invention) delivers improved dart, puncture resistance, and tear in the machine direction, even at higher density, which is an unexpected result. The higher density also delivers higher modulus and moisture/grease barrier, which makes an excellent combination for packaging of certain types of products (e.g., pet food).

Comparative Film I and Inventive Film 3

Comparative Film I and Inventive Film 3 are three-layer (A/B/C) coextruded films that are prepared as follows. Comparative Film I and Inventive Film 3 have the following structures:

Table 12

| Film | Structure |
|---|---|
| Comparative Film I | A: 80% DOWLEX™ NG2045B + 13% DOW™ LDPE 132I + 7% Ampacet $TiO_2$ MB<br>B: 40% ELITE™ 5960G + 40% DOWLEX™ NG2045B + 13% DOW™ LDPE 132I +7% Ampacet $TiO_2$ MB<br>C (sealant): 80% ELITE™ NG5400B+20% DOW™ LDPE 132I |
| Inventive Film 3 | A: 80% First Composition + 13% DOW™ LDPE 132I + 7% Ampacet $TiO_2$ MB<br>B: 40% ELITE™ 5960G + 40% First Composition + 13% DOW™ LDPE 132I + 7% Ampacet $TiO_2$ MB |

(continued)

| Film | Structure |
|---|---|
| | C (sealant): 80% First Composition + 20% DOW™ LDPE 132I |

The films are produced using a Dr. Collin 5-layer coextrusion blown film line. The line was comprised of five 25:1 L/D single screw extruders, equipped with grooved feed zones. Screw diameters for the 5 layers (A/B/C/B/A) were 30 mm/25 mm/25mm/25 mm/30 mm, respectively. The die is 80 mm, and the die gap is 1.8 mm. The blow-up ratio is 2.5:1. The line speed is 7.5 meters/minute with an output rate of 20 kg/hour. The nominal thickness of each film is 100 microns. Comparative Film I and Inventive Film 3 each have a layer distribution of A(30%)/B(40%)/C(30%).

Mechanical properties (dart drop impact, Elmendorf tear, secant modulus, and puncture resistance) are measured using the methods described above. The results are shown in Table 13.

Table 13

| Film | Overall Density ($g/cm^3$) | Dart Drop Impact, Method B (g) | Puncture Resistance ($J/cm^3$) | Tear, MD (g) | 2% Secant Modulus, MD (MPa) |
|---|---|---|---|---|---|
| Comp. Film I | 0.9265 | <300 | 8.3 | 1466 | 283 |
| Inv. Film 3 | 0.9257 | 895 | 12.0 | 2198 | 286 |

The results indicate Inventive Film 3 (which is an embodiment of the present invention), at the same density is Comparative Film I, delivers improved dart, puncture resistance, and tear in the machine direction.

## Claims

**1.** A multilayer film comprising:

(a) a first layer comprising a first composition, wherein the first composition comprises at least one ethylene-based polymer and wherein the first composition has a density of less than 0.935 $g/cm^3$, a melt index ($I_2$) of less than 2.0 g/10 minutes, a MWCDI value greater than 0.9, and a melt index ratio ($I_{10}/I_2$) that meets the following equation: $I_{10}/I_2 \geq 7.0 - 1.2 \times \log(I_2)$, wherein the first layer comprises at least 50 percent by weight of the first composition based on the weight of the first layer;
(b) a second layer comprising a first polyethylene having a density of greater than 0.950 $g/cm^3$ and a melt index ($I_2$) of less 2.0 g/10 minutes, wherein the second layer comprises at least 40 percent by weight of the first polyethylene based on the weight of the second layer; and
(c) a third layer which is a sealant layer,

wherein the multilayer film comprises at least 29 weight percent of the first composition based on the total weight of the film, and wherein the multilayer film comprises at least 15 weight percent of the first polyethylene based on the total weight of the film,

wherein the multilayer film does not include polyamide,
wherein the multilayer film has an overall density from 0.924 to 0.940 $g/cm^3$,
wherein the densities are measured according to ASTM D792 (method B), the melt indices $I_2$ and $I_{10}$ are measured according to ASTM D1238 (method B) at 190°C and at 2.16 kg and 10 kg load, respectively, and the MWCDI is measured as set out in the description.

**2.** The multilayer film of claim 1, wherein the combined amount of the first composition and the first polyethylene is at least 60 weight percent of the film, based on the total weight of the film.

**3.** The multilayer film of any of the preceding claims, wherein the film is a four layer film.

**4.** The multilayer film of claim 3, wherein the film further comprises a fourth layer, wherein the fourth layer comprises at least 50 percent by weight of the first composition based on the weight of the fourth layer, and wherein the film

has an average time for failure due to grease migration of greater than 100 hours when measured according to ASTM F-119 at 60° C at a film thickness of 100 microns, and wherein the film has a dart impact of greater than 700 grams when measured according to ASTM D-1709 (Method B) at a film thickness of 100 microns.

**5.** The multilayer film of any of claims 1 and 2, wherein the film further comprises a fourth layer, wherein the fourth layer comprises at least 50 percent by weight of the first composition based on the weight of the fourth layer, wherein the film further comprises a fifth layer, wherein the fifth layer comprises at least 50 percent by weight of the first polyethylene based on the weight of the fifth layer, wherein the multilayer film comprises at least 40 weight percent of the first polyethylene based on the total weight of the film, and wherein the film has a dart impact of greater than 400 grams when measured according to ASTM D-1709 (Method B) at a film thickness of 75 microns, wherein the film has a tear value in the machine direction of greater than 400 grams when measured according to ASTM D-1922 at a film thickness of 75 microns, and wherein the film has a water vapor transmission rate of less than 1.4 g/($m^2$*day) when measured according to ASTM E-398 at 38° C, 100% relative humidity, and a film thickness of 75 microns.

**6.** The multilayer film of any of claims 1 and 2 or claims 4 and 5, wherein the film is a five layer film.

**7.** The multilayer film of any of the preceding claims, wherein the total film thickness is less than 120 microns.

**8.** The multilayer film of any of claims 1-6, wherein the total film thickness is less than 80 microns.

**9.** A laminate comprising the multilayer film of any of claims 1-8 adhered to a second film comprising polyethylene.

**10.** An article comprising the multilayer film of any of claims 1-8.

**Patentansprüche**

**1.** Mehrschichtfolie, umfassend:

(a) eine erste Schicht, umfassend eine erste Zusammensetzung, wobei die erste Zusammensetzung mindestens ein Polymer auf Ethylenbasis umfasst und wobei die erste Zusammensetzung eine Dichte von weniger als 0,935 g/cm$^3$, einen Schmelzindex ($I_2$) von weniger als 2,0 g/10 Minuten, einen MWCDI-Wert von mehr als 0,9 und ein Schmelzindexverhältnis ($I_{10}/I_2$) aufweist, das der folgenden Gleichung entspricht: $I_{10}/I_2 \geq 7{,}0 - 1{,}2 \times \log(I_2)$, wobei die erste Schicht mindestens 50 Gewichtsprozent der ersten Zusammensetzung basierend auf dem Gewicht der ersten Schicht umfasst;
(b) eine zweite Schicht, umfassend ein erstes Polyethylen, das eine Dichte von mehr als 0,950 g/cm$^3$ und einem Schmelzindex ($I_2$) von weniger als 2,0 g/10 Minuten aufweist, wobei die zweite Schicht mindestens zu 40 Gewichtsprozent das erste Polyethylen basierend auf dem Gewicht der zweiten Schicht umfasst; und
(c) eine dritte Schicht, die eine Dichtstoffschicht ist, wobei die Mehrschichtfolie mindestens 29 Gewichtsprozent die erste Zusammensetzung basierend auf dem Gesamtgewicht der Folie umfasst, und wobei die Mehrschichtfolie mindestens zu 15 Gewichtsprozent das erste Polyethylen basierend auf dem Gesamtgewicht der Folie umfasst,

wobei die Mehrschichtfolie kein Polyamid einschließt,
wobei die Mehrschichtfolie eine Gesamtdichte von 0,924 bis 0,940 g/cm$^3$ aufweist,
wobei die Dichten gemäß ASTM D792 (Methode B) gemessen werden, die Schmelzindizes $I_2$ und $I_{10}$ gemäß ASTM D1238 (Methode B) bei 190 °C und einer Belastung von 2,16 kg beziehungsweise 10 kg gemessen werden und der MWCDI wie in der Beschreibung dargelegt gemessen wird.

**2.** Mehrschichtfolie nach Anspruch 1, wobei die kombinierte Menge der ersten Zusammensetzung und des ersten Polyethylens mindestens 60 Gewichtsprozent der Folie basierend auf dem Gesamtgewicht der Folie beträgt.

**3.** Mehrschichtfolie nach einem der vorstehenden Ansprüche, wobei die Folie eine Vierschichtfolie ist.

**4.** Mehrschichtfolie nach Anspruch 3, wobei die Folie ferner eine vierte Schicht umfasst, wobei die vierte Schicht mindestens 50 Gewichtsprozent die erste Zusammensetzung basierend auf dem Gewicht der vierten Schicht umfasst, und wobei die Folie eine durchschnittliche Zeit für ein Versagen aufgrund von Fettmigration von mehr als 100

Stunden aufweist, wenn sie gemäß ASTM F-119 bei 60° C und einer Foliendicke von 100 Mikrometer gemessen wird, und wobei die Folie eine Durchstoßfestigkeit von mehr als 700 Gramm aufweist, wenn sie gemäß ASTM D-1709 (Methode B) bei einer Foliendicke von 100 Mikrometer gemessen wird.

**5.** Mehrschichtfolie nach einem der Ansprüche 1 und 2, wobei die Folie ferner eine vierte Schicht umfasst, wobei die vierte Schicht mindestens zu 50 Gewichtsprozent die erste Zusammensetzung basierend auf dem Gewicht der vierten Schicht umfasst, wobei die Folie ferner eine fünfte Schicht umfasst, wobei die fünfte Schicht mindestens zu 50 Gewichtsprozent das erste Polyethylen basierend auf dem Gewicht der fünften Schicht umfasst, wobei die Mehrschichtfolie mindestens zu 40 Gewichtsprozent das erste Polyethylen basierend auf dem Gesamtgewicht der Folie umfasst, und wobei die Folie eine Durchstoßfestigkeit von mehr als 400 Gramm aufweist, wenn sie gemäß ASTM D-1709 (Methode B) bei einer Foliendicke von 75 Mikrometern gemessen wird, wobei die Folie einen Reißwert in der Maschinenrichtung von mehr als 400 Gramm aufweist, wenn sie gemäß ASTM D-1922 bei einer Foliendicke von 75 Mikrometern gemessen wird, und wobei die Folie eine Wasserdampfdurchlässigkeitsrate von weniger als 1,4 g/($m^2$*Tag) aufweist, wenn sie gemäß ASTM E-398 bei 38 °C, 100 % relativer Luftfeuchtigkeit und einer Foliendicke von 75 Mikrometer gemessen wird.

**6.** Mehrschichtfolie nach einem der Ansprüche 1 und 2 oder 4 und 5, wobei die Folie eine Fünfschichtfolie ist.

**7.** Mehrschichtfolie nach einem der vorstehenden Ansprüche, wobei die Gesamtfoliendicke weniger als 120 Mikrometer beträgt.

**8.** Mehrschichtfolie nach einem der Ansprüche 1 bis 6, wobei die Gesamtfoliendicke weniger als 80 Mikrometer beträgt.

**9.** Laminat, umfassend die Mehrschichtfolie nach einem der Ansprüche 1 bis 8, die an eine zweite Folie, umfassend Polyethylen, geklebt ist.

**10.** Erzeugnis, umfassend die Mehrschichtfolie nach einem der Ansprüche 1 bis 8.

## Revendications

**1.** Film multicouche comprenant :

(a) une première couche comprenant une première composition, dans lequel la première composition comprend au moins un polymère à base d'éthylène et dans lequel la première composition a une masse volumique inférieure à 0,935 g/$cm^3$, un indice de fusion ($I_2$) inférieur à 2,0 g/10 minutes, une valeur MWCDI supérieure à 0,9, et un rapport d'indice de fusion ($I_{10}/I_2$) qui respecte l'équation suivante : $I_{10}/I_2 \geq 7{,}0 - 1{,}2 \times \log(I_2)$, dans lequel la première couche comprend au moins 50 pour cent en poids de la première composition en fonction du poids de la première couche ;
(b) un deuxième couche comprenant un premier polyéthylène ayant une masse volumique supérieure à 0,950 g/$cm^3$ et un indice de fusion ($I_2$) inférieur à 2,0 g/10 minutes, dans lequel la deuxième couche comprend au moins 40 pour cent en poids du premier polyéthylène en fonction du poids de la deuxième couche ; et
(c) une troisième couche qui est une couche d'étanchéité, dans lequel le film multicouche comprend au moins 29 pour cent en poids de la première composition en fonction du poids total du film, et dans lequel le film multicouche comprend au moins 15 pour cent en poids du premier polyéthylène en fonction du poids total du film,

dans lequel le film multicouche ne comporte pas de polyamide,
dans lequel le film multicouche a une masse volumique globale allant de 0,924 à 0,940 g/$cm^3$,
dans lequel les masses volumiques sont mesurées selon ASTM D792 (procédé B), les indices de fusion $I_2$ et $I_{10}$ sont mesurés selon ASTM D1238 (procédé B) à 190 °C et à une charge de 2,16 kg et 10 kg, respectivement, et le MWCDI est mesuré comme indiqué dans la description.

**2.** Film multicouche selon la revendication 1, dans lequel la quantité combinée de la première composition et du premier polyéthylène est d'au moins 60 pour cent en poids du film, en fonction du poids total du film.

**3.** Film multicouche selon l'une quelconque des revendications précédentes, dans lequel le film est un film à quatre couches.

4. Film multicouche selon la revendication 3, dans lequel le film comprend en outre une quatrième couche, dans lequel la quatrième couche comprend au moins 50 pour cent en poids de la première composition en fonction du poids de la quatrième couche, et dans lequel le film a un temps moyen de défaillance dû à une migration de graisse, supérieur à 100 heures lorsqu'on mesure selon ASTM F-119 à 60 °C à une épaisseur de film de 100 micromètres, et dans lequel le film a une résistance au choc à la torpille supérieure à 700 grammes lorsqu'on mesure selon ASTM D-1709 (Procédé B) à une épaisseur de film de 100 micromètres.

5. Film multicouche selon l'une quelconque des revendications 1 et 2, dans lequel le film comprend en outre une quatrième couche, dans lequel la quatrième couche comprend au moins 50 pour cent en poids de la première composition en fonction du poids de la quatrième couche, dans lequel le film comprend en outre une cinquième couche, dans lequel la cinquième couche comprend au moins 50 pour cent en poids du premier polyéthylène en fonction du poids de la cinquième couche, dans lequel le film multicouche comprend au moins 40 pour cent en poids du premier polyéthylène en fonction du poids total du film, et dans lequel le film a une résistance au choc à la torpille supérieure à 400 grammes lorsqu'on mesure selon ASTM D-1709 (Procédé B) à une épaisseur de film de 75 micromètres, dans lequel le film a une valeur de déchirure dans la direction machine supérieure à 400 grammes lorsqu'on mesure selon ASTM D-1922 à une épaisseur de film de 75 micromètres, et dans lequel le film a un taux de transmission de vapeur d'eau inférieur à 1,4 g/($m^2$*jour) lorsqu'on mesure selon ASTM E-398 à 38 °C, 100 % d'humidité relative, et à une épaisseur de film de 75 micromètres.

6. Film multicouche selon l'une quelconque des revendications 1 et 2 ou des revendications 4 et 5, dans lequel le film est un film à cinq couches.

7. Film multicouche selon l'une quelconque des revendications précédentes, dans lequel l'épaisseur totale de film est inférieure à 120 micromètres.

8. Film multicouche selon l'une quelconque des revendications 1 à 6, dans lequel l'épaisseur totale de film est inférieure à 80 micromètres.

9. Stratifié comprenant le film multicouche selon l'une quelconque des revendications 1 à 8 fixé par adhérence à un second film comprenant du polyéthylène.

10. Article comprenant le film multicouche selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2019108326 A
- US 4599392 A
- US 5272236 A
- US 5278272 A
- US 5582923 A
- US 5733155 A
- US 3645992 A
- US 4076698 A
- US 3914342 A
- US 5854045 A
- US 4612300 A
- US 4314912 A
- US 4547475 A
- US 6103657 A
- US 5064802 A
- US 5153157 A
- US 5296433 A
- US 5321106 A
- US 5350723 A
- US 5425872 A
- US 5625087 A
- US 5721185 A
- US 5783512 A
- US 5883204 A
- US 5919983 A
- US 6696379 B
- US 7163907 B
- US 6515155 B1
- WO 2018063578 A
- US 5977251 A

### Non-patent literature cited in the description

- **WILLIAMS ; WARD.** J. Polym. Sci. *Polym. Letters,* 1968, vol. 6, 621
- **KARJALA et al.** Detection of Low Levels of Long-chain Branching in Polyolefins,. *Annual Technical Conference - Society of Plastics Engineers,* 2008, vol. 66, 887-891
- **BUSICO, V. et al.** *Macromolecules,* 2005, vol. 38, 6988
- *ASTM D,* 5017-96
- **J. C. RANDALL et al.** NMR and Macromolecules. *ACS Symposium series,* vol. 247
- Am. Chem. Soc., Washington, D.C. 1984
- **J. C. RANDALL.** Polymer Sequence Determination. Academic Press, 1977
- **WILLIAMS ; WARD.** J. Polym. Sci. *Polym. Let.,* 1968, vol. 6, 621